# EUROPEAN PATENT APPLICATION

(11) **EP 1 261 174 A1**
(43) Date of publication of application: **27.11.2002**
(21) Application number: 02710304.3
(22) Date of filing: 16.01.2002
(51) Int. Cl.: H04L 12/46, H04L 12/28

(54) **DATA TRANSMISSION METHOD, DATA TRANSMITTER, RECORD MEDIUM, AND PROGRAM**

(30) Priority: 16.01.2001 JP 2001007933; 06.07.2001 JP 2001206775
(71) Applicant: Sony Corporation, Tokyo 141-0001 (JP)
(72) Inventor: KAWAMURA, Harumi ;c/o Sony Corporation, Shinagawa-ku, Tokyo 141-0001 (JP)
(74) Representative: Robinson, Nigel Alexander Julian
(86) International application number: JP0200246
(87) International publication number: WO02056548

(57) **Abstract**

When a device control command is transmitted from a second device 5 through a predetermined wireless network, to a first device 1 connected to a predetermined wired network, the first device 1 having received the command decides the received device control command, and when the above command is determined to be a command for controlling a predetermined device (for example, one of devices 2 to 4) connected to the wired network as a result of the decision, the corresponding command is transmitted to the predetermined device through the wired network. Therefore, a command generated within the wireless network such as Bluetooth can be preferably transmitted to a device connected to the wired network such as IEEE 1394 method.

## Description

### TECHNICAL FIELD

The present invention relates to a data transmission method and a data transmission apparatus by using both of a wireless network and a wired network, and a program applied to the above data transmission and a recording medium with the program stored.

### BACKGROUND ART

Hitherto, there has been proposed a data transmission method of forming a wired network connecting a plurality of devices by a wired serial data bus standardized as the IEEE (The Institute of Electrical and Electronics Engineers) 1394. For example, an audio device and a video device (hereinafter, referred to as AV device) connectable to the IEEE 1394 bus line have been developed, and by forming a network with the AV devices, audio data and video data can be transferred between the devices.

In this network, predetermined commands (AV/C Command Transaction Set: hereinafter, referred to as AV/C command) can be used so as to control the AV device connected to the network, according to the other device. The details of the IEEE 1394 and the AV/C command are described in "AV/C Digital Interface Command Set General Specification" published in the 1394 Trade Association.

In recent years, wireless communication system based on a standard called Bluetooth (Bluetooth: trade mark) has been proposed and prevailing in actual fields. According to this wireless communication system, telephone communication audio data, facsimile image data, computer data and the like are transmitted among plural devices using a frequency band of 2.4 GHz. This is a short-distance wireless communication system in which a relatively short-distance network is assumed while its wireless communication distance among devices is from some m to about 100 m max. This short-distance wireless communication system accommodates profiles which specify how the data transmission is carried out for each data type to be transmitted.

Although the details of the Bluetooth communication method are described in the embodiment described later, the Bluetooth SIG that is a standardization organization for defining the standard publishes the above information. Also in case of a wireless communication device called Bluethooth, commands defined by the protocol referred to as Audio/Video Control Transport Protocol (hereinafter, referred to as AVCTP) can be used so as to control the other AV device within a network.

Since a wired network connected through the above IEEE 1394 bus line and a wireless network for wireless communication such as the Bluetooth are configured separately, commands cannot be transferred, for example, between the device corresponding to the IEEE 1394 and the device corresponding to the Bluethooth. Namely, each command defined for every network is formed differently, and for example, it is effectively impossible to send a command received by a wireless network to a wired bus line as it is.

Further, since a wireless network and a wired network are to be configured separately, each network requires the corresponding management processing for setting the sending source and destination of data, and only by the conversion of the command configuration, it is impossible to transfer data between the two networks.

Although the description has been made, for example, by taking the IEEE 1394 method as a wired network connected through a bus line and taking the Bluetooth as a wireless network, there is the same problem also in case of using another wired network and wireless network like this.

### DISCLOSURE OF THE INVENTION

The present invention aims to enable a preferable transmission of a command created within a wireless network to a device connected to a wired network.

According to a first aspect, there is provided a data transmission method, wherein when a device control command is transmitted from a second device through a predetermined wireless network, to a first device connected to a predetermined wired network, the first device determines the received device control command, and when the above command is determined to be a command for controlling a predetermined device connected to the wired network as a result of the decision, the corresponding command is transmitted to the predetermined device through the wired network.

Consequently, it is possible to transfer a device control command issued from a device on the side of the wireless network to a specified device within the wired network, thereby enabling a remote control of the device within the network formed by connection of a wired bus line, according to a command by wireless.

According to a second aspect, there is provided the data transmission method according to the first aspect, wherein the processing of determining the predetermined device from the received command in the first device is processing for searching for a device corresponding to content indicated by the command, from the devices connected to the wired network.

Consequently, only by the determination of the content indicated by a command, the destination of the command within the wired network can be determined at ease.

According to a third aspect, there is provided the data transmission method according to the second aspect, wherein the first device previously examines a function of a device connected to the wired network and holds data about the examined function.

Consequently, it is possible to determine a device corresponding to the content indicated by a command at ease.

According to a fourth aspect, there is provided the data transmission method according to the first aspect, wherein the processing of determining the predetermined device from the received command in the first device is processing for determining a device of a sending source of stream data within the wired network as the predetermined device.

Consequently, it is possible to directly control a device which transmits the stream data to the bus line within the wired network.

According to a fifth aspect, there is provided the data transmission method according to the first aspect, wherein the processing of determining the predetermined device from the received command in the first device is processing of determining a device previously registered in the first device, as the predetermined device.

Consequently, it is possible to transfer a command to a registered device assuredly.

According to a sixth aspect, there is provided the data transmission method according to the first aspect, wherein, in the first device, a command received as a wireless signal is converted into data configuration for wired network and then transmitted to the wired network.

Consequently, it is possible to cope with the case where the command configuration is different between the wired network and the wireless network.

According to a seventh aspect, there is provided the data transmission method according to the first aspect, wherein the device control command from the second device is a command of AVCTP protocol and a command for controlling the predetermined device is AV/C command of IEEE 1394 method.

Consequently, it is possible to use a network of Bluetooth and the like by use of the AVCTP protocol as the wireless network and use a network of the IEEE 1394 method and the like by use of the AV/C command as the wired network, thereby exchanging commands between the both networks at ease.

According to an eighth aspect, there is provided a data transmission apparatus comprising first communication means, connected to a bus line forming a predetermined wired network, capable of performing data communication bidirectionally with another device within the wired network, second communication means capable of data communication bidirectionally with another device forming a predetermined wireless network through wireless communication, and control means of determining destination of the received device control command when the second communication means receives a predetermined device control command and transmitting the device control command from the first communication means when the determined destination is a device connected to the wired network.

Consequently, it is possible to transfer the device control command issued from a device on the side of the wireless network to a specified device within the wired network, thereby enabling a remote control of the device within the network formed by connection of a wired bus line, according to a command by wireless.

According to a ninth aspect, there is provided the data transmission apparatus according to the eighth aspect, wherein the processing of determining the destination of the device control command in the control means is processing for searching for a device corresponding to content indicated by the command, from the devices connected to the wired network.

Consequently, only by the determination of the content indicated by a command, the destination of the command within the wired network can be decided at ease.

According to a tenth aspect, there is provided the data transmission apparatus according to the ninth aspect, wherein the control means previously examines a function of a device connected to the wired network, holds data about the examined function, and searches for a device corresponding to the content indicated by the command by using the held data.

Consequently, it is possible to determine a device corresponding to the content indicated by a command at ease.

According to an eleventh aspect, there is provided the data transmission apparatus according to the eighth aspect, wherein the processing of determining the destination of the device control command by the control means is processing of determining a device of a sending source of stream data within the wired network as the destination.

Consequently, it is possible to directly control a device which transmits the stream data to the bus line within the wired network.

According to a twelfth aspect, there is provided the data transmission apparatus according to the eighth aspect 8, wherein the processing of determining the destination of the device control command by the control means is processing of determining a previously registered device as the destination.

Consequently, it is possible to transfer a command to a registered device assuredly.

According to a thirteenth aspect, there is provided the data transmission apparatus according to the eighth aspect, comprising converting means for converting a command received by the second communication means into a command to be transmitted by the first communication means.

Consequently, it is possible to cope with the case where the command configuration is different between the wired network and the wireless network.

According to a fourteenth aspect, there is provided the data transmission apparatus according to the eighth aspect, wherein the predetermined device control command from the second communication means is a command of AVCTP protocol and the device control command from the first communication means is AV/C command of IEEE 1394 method.

Consequently, it is possible to use a network of Bluetooth and the like by use of the AVCTP protocol as the wireless network and use a network of the IEEE 1394 method and the like by use of the AV/C command as the wired network, thereby exchanging commands between the both networks at ease.

According to a fifteenth aspect, there is provided a recording medium recording a program for, when a device control command is transmitted from a second device through a predetermined wireless network, to a first device connected to a predetermined wired network, making the first device determine the received device control command and transmitting the corresponding command to a predetermined device through the wired network when the above command is determined to be a command for controlling the predetermined device connected to the wired network as a result of the decision.

Consequently, by installing the program stored in this recording medium into a transmission apparatus and the like, it is possible to transfer the device control command issued from a device on the side of the wireless network to a specified device within the wired network, thereby enabling a remote control of the device within a network formed by connection of a wired bus line, according to a command by wireless.

According to a sixteenth aspect, there is provided a program for, when a device control command is transmitted from a second device through a predetermined wireless network, to a first device connected to a predetermined wired network, making the first device decide the received device control command and transmitting the corresponding command to a predetermined device through the wired network when the above command is determined to be a command for controlling the predetermined device connected to the wired network as a result of the decision.

Consequently, by installing the program into a transmission apparatus and the like and executing the program, it is possible to transfer the device control command issued from a device on the side of the wireless network to a specified device within the wired network, thereby enabling a remote control of the device within a network formed by connection of a wired bus line, according to a command by wireless.

### BRIEF DESCRIPTION OF DRAWINGS

FIG. 1 is a block diagram showing a configuration example of a device according to one embodiment of the present invention.

FIG. 2 is a block diagram showing a configuration example of a monitor receiver according to one embodiment of the present invention.

FIG. 3 is a block diagram showing a configuration example of a portable telephone terminal according to one embodiment of the present invention.

FIG. 4 is a block diagram showing a configuration example of a short-distance wireless communication unit according to one embodiment of the present invention.

FIG. 5 is an explanatory diagram showing an example of the frame structure defined by the IEEE 1394 method.

FIG. 6 is an explanatory diagram showing an example of relationship between a plug, a plug control register, and a transmission channel.

FIG. 7 is an explanatory diagram showing an example of relationship between a command and a response of the AV/C command.

FIG. 8 is an explanatory diagram showing in detail an example of relationship between a command and a response of the AV/C command.

FIG. 9 is an explanatory diagram showing an example of the data configuration of the AV/C command.

FIG. 10 is an explanatory diagram showing a concrete example of the AV/C command; FIG. 10A is a view showing an example of command type (C type) and a response, FIG. 10B is a view showing an example of a subunit type, and FIG. 10C is a view showing an example of opcode (operation code).

FIG. 11 is an explanatory diagram showing a concrete example of a command and a response of the AV/C command; FIG. 11A is a view showing an example of a command, and FIG. 11B is a view showing an example of a response.

FIG. 12 is an explanatory diagram showing an example of protocol stack.

FIG. 13 is an explanatory diagram showing an example of the hierarchical structure of wireless communication.

FIG. 14 is an explanatory diagram showing an example of the setting of transmission frequency.

FIG. 15 is an explanatory diagram showing a frequency hopping state.

FIG. 16 is an explanatory diagram showing an example of single-slot packet arrangement according to time axis.

FIG. 17 is an explanatory diagram showing an example in which single-slot packets and multi-slot packets are mixed according to time axis.

FIG. 18 is an explanatory diagram showing an example of the transmission state between a master and a slave; FIG. 18A shows the transmission from a master and FIG. 18B shows the transmission from a slave.

FIG. 19 is an explanatory diagram showing an example of the network configuration; FIG. 19A shows an example in case of one master and one slave, FIG. 19B shows an example in case of a plurality of slaves, and FIG. 19C shows an example in case of a plurality of masters.

FIG. 20 is a timing diagram showing an example of communication with SCO link; FIG. 20A shows the transmission from a master, and FIG. 20B shows the transmission from a slave.

FIG. 21 is a timing diagram showing an example of communication based on asynchronous communication method; FIG. 21A shows the transmission from a master, FIG. 21B shows the transmission from a slave 1, FIG. 21C shows the transmission from a slave 2, and FIG. 21D shows the transmission from a slave 3.

FIG. 22 is a timing diagram showing an example of communication based on isochronous communication method; FIG. 22A shows the transmission from a master, and FIG. 22B shows the transmission from a slave.

FIG. 23 is a timing diagram showing an example of communication based on broadcast communication method; FIG. 23A shows the transmission from a master, FIG. 23B shows the reception at the slave 1, FIG. 23C shows the reception at the slave 2, and FIG. 23D shows the reception at the slave 3.

FIG. 24 is a timing diagram showing an example in case where SCO link and ALC link are used together; FIG. 24A shows the transmission from a master, FIG. 24B shows the transmission from the slave 1, FIG. 24C shows the transmission from the slave 2, and FIG. 24D shows the transmission from the slave 3.

FIG. 25 is an explanatory diagram showing an example of the structure of clock data.

FIG. 26 is an explanatory diagram showing an example of the structure of address.

FIG. 27 is a diagram showing an example of generation processing of frequency hopping pattern.

FIG. 28 is an explanatory diagram showing an example of packet format.

FIG. 29 is an explanatory diagram showing an example of the structure of access code.

FIG. 30 is an explanatory diagram showing an example of the structure of a packet header.

FIG. 31 is an explanatory diagram showing an example of the structure of payload.

FIG. 32 is an explanatory diagram showing an example of the structure of a payload header in a single-slot packet.

FIG. 33 is an explanatory diagram showing an example of the structure of a payload header in a multi-slot packet.

FIG. 34 is an explanatory diagram showing an example of the structure of the payload of FHS packet.

FIG. 35 is an explanatory diagram showing an example of state transition of devices.

FIG. 36 is an explanatory diagram showing an example of communication for inquiry; FIG. 36A shows the transmission of IQ packet and FIG. 36B shows the transmission of FHS packet.

FIG. 37 is a timing diagram showing an example of inquiry processing; FIG. 37A shows the transmission from a master and FIG. 37B shows the transmitting/receiving at a slave.

FIG. 38 is an explanatory diagram showing an example of communication for call; FIG. 38A shows an example in which a master transmits ID packet to a slave and FIG. 38B shows an example in which a master transmits FHS packet to a slave.

FIG. 39 is a timing diagram showing an example of calling processing; FIG. 39A shows the transmission from a master and FIG. 39B shows the transmission from a slave.

FIG. 40 is an explanatory diagram showing an example of the hierarchical structure in AVDCP.

FIG. 41 is an explanatory diagram showing an example of packet configuration at a data transmission in AVDCP; FIG. 41A shows an example of the whole packet, FIG. 41B shows an example of payload, and FIG. 41C shows an example of AVCTP message.

FIG. 42 is an explanatory view showing an example of the building of connection in AVDCP and the transmission of a command and a response.

FIG. 43 is an explanatory view showing an example of release connection in AVDCP.

FIG. 44 is an explanatory view showing an example of data configuration in AVDCP.

FIG. 45 is an explanatory view showing an example of the format of a pass-through command.

FIG. 46 is an explanatory view showing examples of operation IDs of the pass-through command.

FIG. 47 is an explanatory view showing an example of command transmission according to one embodiment of the present invention.

FIG. 48 is a flow chart showing an example of device information collecting processing according to one embodiment of the present invention.

FIG. 49 is a flow chart showing an example of destination deciding processing of a command according to one embodiment of the present invention.

### BEST MODE FOR CARRYING OUT THE INVENTION

Hereinafter, one embodiment of the present invention will be described with reference to the attached drawings.

In the embodiment, a plurality of AV devices are connected on a wired network connected through the IEEE 1394 bus line, and at least one device within the wired network is set to serve also as a device within a wireless network called Bluetooth.

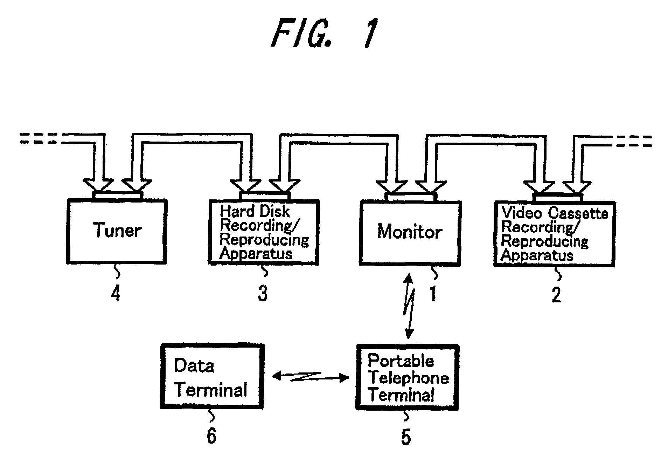

FIG. 1 is a view showing an example of the network configuration of this embodiment. In the example, AV devices such as a monitor receiver 1, a video cassette recording/reproducing apparatus 2, a hard disk recording/reproducing apparatus 3, and a tuner 4 are connected through the IEEE 1394 bus line, so as to transfer video data, audio data, and control command among the above devices.

The monitor receiver 1 of this embodiment is provided with a transmitting/receiving unit of wireless signals so that it can work as a device within a wireless network called Bluetooth. In this example, the wireless network is formed by three units of the monitor receiver 1, the portable telephone terminal 5, and some data terminal 6. Thus, control commands and various data can be transmitted by wireless, also within the wireless network. The portable telephone terminal 5 of the embodiment is set to work as a remote control apparatus for controlling the AV device, and according to a predetermined key operation assigned to the portable telephone terminal 5, a command as remote control signal for remote-controlling the AV device can be wireless-transmitted to the monitor receiver 1 through the wireless network.

When sending a command for remote-controlling the AV device according to the predetermined key operation assigned to the portable telephone terminal 5, the monitor receiver 1, upon receipt of the command, is set to transmit the command to the other AV device through a bus line on demand. The details of the relaying processing of the command through the monitor receiver 1 will be described later.

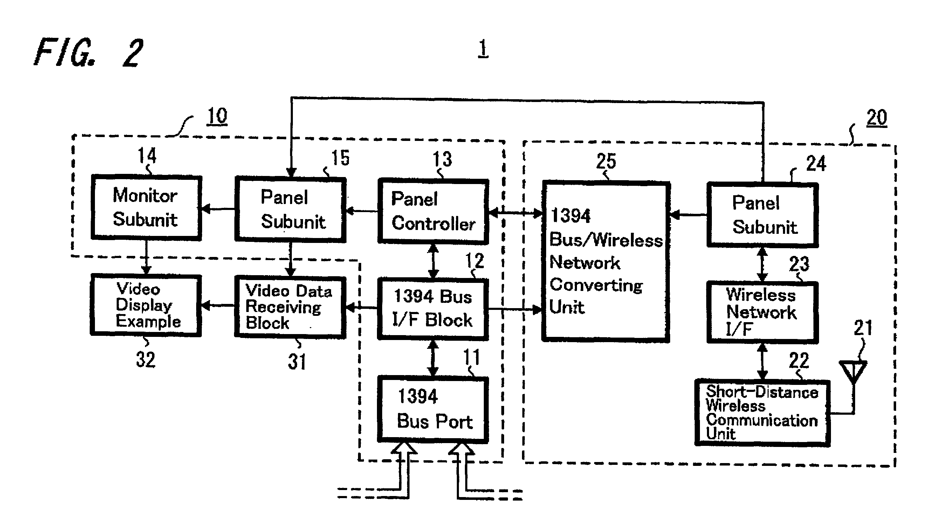

FIG. 2 is a view showing a configuration example of the monitor receiver 1. The monitor receiver 1 of the embodiment is set to perform the receiving processing of the video data supplied from the video device connected through the bus line and display the video on a display provided in this receiver. In order to perform this processing, it is provided with a video data receiving block 31 for performing the receiving processing and a video display unit 32 for displaying the video data received by this receiving block 31 on the display.

Further, it is provided with an IEEE 1394 bus processing unit 10 for transmitting data through the IEEE 1394 bus line and a wireless network processing unit 20 for performing wireless transmissions for wireless network.

The IEEE 1394 bus processing unit 10 is formed by a port 11 where one or several signal lines forming the IEEE 1394 bus line are connected and an interface block 12 for performing conversion processing of the data transmitted to the bus line and the data processed within the receiver 1. The video data received through the bus line is supplied to the video data receiving block 31 through the interface block 12 and displayed by the display unit 32. When receiving a control command through the bus line, it is supplied to a panel controller 13 connected to the interface block 12, and the panel controller 13 sends an instruction to a panel subunit 14 and a monitor subunit 15 based on the received command, so as to perform various processing concerned with the video display by the receiving block 31 and the display unit 32.

The panel controller 13 within the IEEE 1394 bus processing unit 10 is set to control the transmission on the bus line. The controller 13 is also set to hold the data necessary for this control. Concretely, the controller 13 collects subunit structures of the devices on the wired network connected through the bus line and holds the above into a memory within the controller 13. Further, the controller 13 also collects the information whether or not the respective devices Within the wired network can cope with the control command called pass-through command and holds the above into the memory within the controller 13.

In the wireless network processing unit 20, the short-distance wireless communication unit 22 with an antenna 21 connected performs the transmission processing for creating a wireless signal to be sent to the other terminal within the wireless network and the receiving processing for receiving a signal wireless-transmitted from the other terminal within the wireless network. The signal received by the wireless communication unit 22 is converted into the data to be processed within the receiver 1 and supplied to the panel subunit 24. The data supplied from the panel subunit 24 is converted into data configuration for wireless transmission and the converted data is supplied to the wireless communication unit 22, by the wireless network interface unit 23, hence to be transmitted by wireless.

The panel subunit 24 instructs the monitor subunit 15 provided in the IEEE 1394 bus processing unit 10 to control the operation of the receiver such as video display on the video display unit 32, based on the command received as wireless signal.

An IEEE 1394 bus/wireless network converting unit 25 is provided within the wireless network processing unit 20 of this embodiment, and when the command received as a wireless signal by the wireless network processing unit 20 is a command which must be transmitted to the other device within the wired network connected to the receiver through the bus line, the converting unit 25 converts the command into a command of the data configuration to be transmitted through the IEEE 1394 bus line, and the converted command is transmitted to the panel controller 13 on the side of the IEEE 1394 bus processing unit 10. In the conversion processing here, the header portion is removed from the command data, for example, of the Bluetooth format, and the data of the destination on the bus line is added there, hence to form the data to be transmitted through the IEEE 1394 bus line.

The destination of the converted command on the bus line is determined by the converting unit 25 through the processing previously set. As the processing at this time, for example, by using the isochronous channel on the bus line, the converting unit 25 may receive the information of the device of a sending source (source device) of the sending stream data, and the source device can be defined as the destination of the command.

Alternatively, the converting unit 25 may determine the destination of the converted command on the bus line, according to the information collected and stored by the panel controller 13. For example, the converting unit 25 may determine a device having a subunit executable of the content instructed by the command, based on the information from the panel controller 13, and it may fix the same device as the destination of the command.

Alternatively, the converting unit 25 may fix a device having been registered previously in the panel controller 13 based on the user's operation as the destination of the converted command on the bus line. In this case, destination may be registered, for example, for every type of commands and a proper destination may be set for every received command.

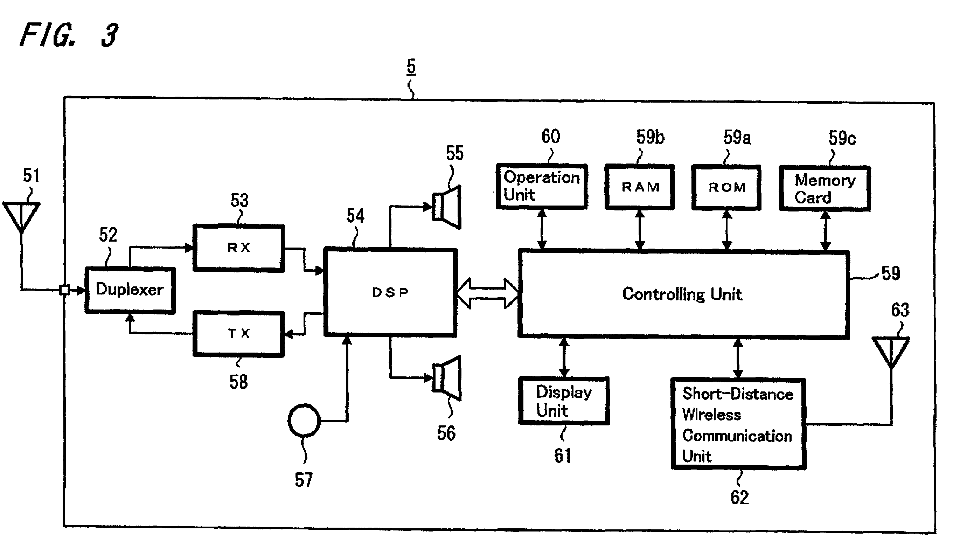

FIG. 3 is a view showing a configuration example of the portable telephone terminal 5. The portable telephone terminal 5 of the embodiment is provided with an antenna 51, and the antenna 51 is connected to a receiving circuit 53 and a sending circuit 58 through a duplexer 52, hence to do the receiving processing of the signal received by the antenna 51 in the receiving circuit 53 and wireless-transmit the signal processed for transmission by the sending circuit 58 from the antenna 51. The receiving circuit 53 and the sending circuit 58 are connected to a digital signal processing apparatus (hereinafter, referred to as DSP) 54. The DSP 54 performs the demodulation of the received signals, the receiving processing for extracting various data such as sound data from the demodulated signals, and the transmission processing such as converting the sending data such as the sound data into the data configuration for transmission and modulating the above for transmission.

A speaker 55 for phone call is connected to the DSP 54, and when receiving the sound data, the obtained sound data is converted into analog sound signals, in the DSP 54, so as to output the analog sound signals from the speaker 55. Further, a microphone 57 for phone call is connected to the DSP 54, and the sound signals output from the microphone 57 are converted into digital sound data in the DSP 54, for the transmission processing. Further, a speaker 56 for sounding a beep is provided separately from the speaker 55 of phone call.

The communication processing within the portable telephone terminal 5 is performed by a control of a controlling unit 59. A ROM 59a where the data such as a program necessary for the operation of the portable telephone terminal is stored and a RAM 59b used for storing the input data and the download data are connected to the controlling unit 59. The RAM 59b has an area for storing the setting data necessary for short-distance communication, where, for example, the data registered for short-distance communication of a terminal is stored. The details of the data registered for this short-distance communication will be described later.

The portable telephone terminal 5 of the embodiment is set to have a memory card 59c inserted there, and according to the control of the controlling unit 59, the data obtained through a wireless telephone line or short-distance wireless communication can be stored into the inserted memory card 59c. For example, audio data can be downloaded through a wireless telephone line hence to be stored in the memory card 59c, and the data necessary for setting the short-distance communication can be stored in the memory card 59c.

Further, the terminal 5 is provided with a display unit 61 for displaying various letters, numeric characters, figures, and the like, so as to perform various display depending on the operation state according to the control of the controlling unit 59. In case of the embodiment, a display panel capable of color display is used as the display unit 61. The operational information of an operation unit 60 formed by dial keys and various function keys is also supplied to the controlling unit 59, so that the controlling unit 59 can control the processing depending on the operation. As the keys prepared as the operation unit 60, for example, there are keys for instructing the operation of the AV device in case of the embodiment. Further, the keys of the terminal 5 such as dial keys may be assigned as the keys for instructing operation of the AV device by setting the mode.

Further, the portable telephone terminal 5 of the embodiment is provided with a short-distance wireless communication unit 62, and use of the short-distance wireless communication unit 62 enables short-distance wireless communication by the short-distance wireless communication method. An antenna 63 different from the above-mentioned antenna 51 for wireless telephone communication is connected to the short-distance wireless communication unit 62, and therefore, at a short distance of 100 m or less, the terminal 5 can perform the wireless communication directly with the device having the short-distance wireless communication unit of the same standard. The data transmission by the short-distance wireless communication unit 62 is also controlled by the controlling unit 59, and the data is exchanged between the DSP 54 and the short-distance wireless communication unit 62 depending on the necessity.

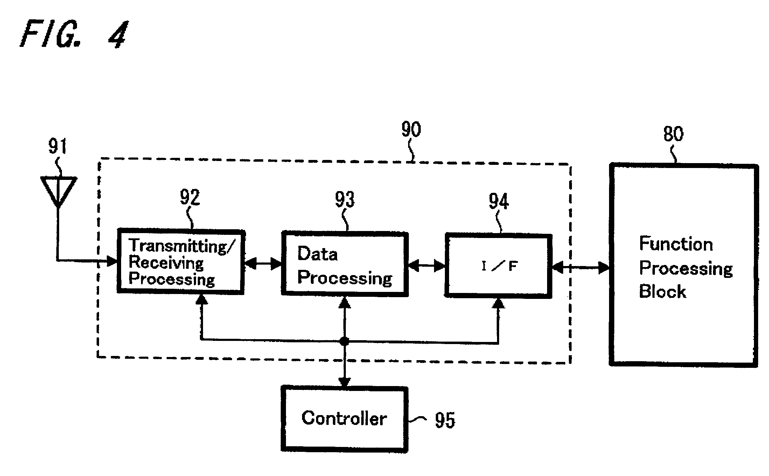

FIG. 4 is a block diagram showing an example of the structure of a short-distance wireless communication portion 22, 62 equipped for the monitor receiver 1 and the portable telephone terminal 5. A transmission/reception processing portion 92 connected to an antenna 91 executes high-frequency signal processing so as to carry out radio transmission processing and radio reception processing. A signal to be transmitted by the transmission/reception processing portion 92 is transmitted at a channel set up at an interval of 1 MHz in 2.4 GHz band. A signal of each channel is subjected to a processing called frequency hopping for changing transmission frequency at a slot interval which will be described later. Assuming that the frequency hopping is carried out for each slot, because a slot takes 625seconds, the frequency is switched 1,600 times per second thereby preventing an interference with another radio communication. As modulation method for radio transmission signal, modulation method called GFSK (Gaussian filtered FSK) is employed. This modulation method is a frequency shift modulation method in which the band is limited by a low-pass filter having a frequency transmission characteristic having Gaussian distribution.

A signal received by the transmission/reception processing portion 92 and a signal to be transmitted by the transmission/reception processing portion 92 are subjected to base band processing by a data processing portion 93. The Bluetooth standard employs TDD (Time Division Duplex) in which basically transmitting/receiving are carried out alternately and the data processing portion 93 carries out a processing of the transmission slot and a processing of reception slot alternately.

A function processing block 80 is connected to the data processing portion 93 through an interface portion 94 so that received data is supplied to the function processing block 80 and data transmitted from the function processing block 80 is converted to transmission slots by the data processing portion 93. A processing for transmission in the transmission/reception processing portion 92, the data processing portion 93 and the interface portion 94 is carried out under control of the controller 95. In stead of the controller 95 a central control unit incorporated in, for example, respective devices can be used. Aside from the central control unit, a dedicated controller prepared for short distance wireless communication may be used.

The transmission/reception processing portion 92, the data processing portion 93 and the interface portion 94 correspond to the short distance wireless communication portion 90 for carrying out the Bluetooth communication.

The function processing block 80 connected to the short distance wireless communication portion 90 serves for a portion for carrying out actually the function of the apparatus.

For example, in case of the monitor receiver 1, it corresponds to the portion for displaying video, and performing the data transfer processing between the wireless network and the network connected through the IEEE 394 bus line. In case of the portable telephone terminal 5, it corresponds to the portion for performing the communication processing through a wireless telephone line and the processing for generating data (command in case of the embodiment) to be transmitted by the short-distance wireless communication unit, based on an instruction by a key operation or an instruction received through the telephone line.

The short-distance wireless communication unit 90 can be integrated into the device such as the monitor receiver 1 and the portable telephone terminal 5, and besides, it may be formed separately from the main body and externally connected to the main body.

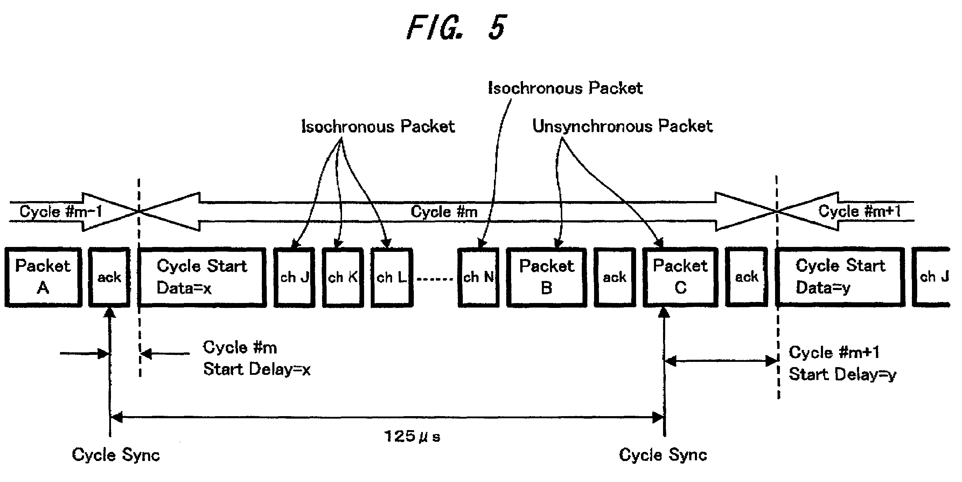

The structure of the data transmission on the network of the embodiment will be described this time. A method of transmitting data through the IEEE 1394 bus line, that is a wired network connected through the monitor receiver 1, will be described with reference to FIGS. 5 to 11.

FIG. 5 is a diagram showing the cycle structure of data transmission of devices connected through the IEEE 1394 bus. In the IEEE 1394 bus, data is divided into packets, and the packets are transmitted in a time sharing manner with reference to a cycle having a length of 125 S. The cycle is made on the basis of a cycle start signal supplied from a node (any device connected to the bus) having a cycle master function.

An isochronous packet assures a band (which is a time unit but is called a band) required for transmission from the heads of all the cycles. For this reason, in isochronous transmission, transmission of the data within a fixed time period is guaranteed. However, acknowledgement from the reception side is not performed. When a transmission error occurs, a protection device does not exist, and the data are lost. In isochronous transmission in which a node secures a bus as a result of arbitration transmits an isochronous packet in a period of time not used for isochronous transmission of the respective cycles, reliable transmission is secured by using acknowledge and retry. However, the transmission timing is not constant.

In the isochronous transmission, stream data such as video data and audio data is transmitted. In the asynchronous transmission, for example, a control command is transmitted.

When a predetermined node performs isochronous transmission, the node must correspond to an isochronous function. At least one of nodes corresponding to the isochronous function must have a cycle master function. In addition, at least one of the nodes connected to the IEEE 1394 serial bus must have the function of isochronous resource manager.

A node connected to the IEEE 1394 serial bus has a PCR (Plug Control Register) defined by the IEC 1883 at a predetermined address of the register provided in the data input/output unit, so as to form a plug virtually. This is obtained by substantiating the concept of a plug to logically form a signal path similar to an analog interface. The PCR has an oPCR (output Plug Control Register) representing an output plug and an iPCR (input Plug Control Register) representing an input plug. In addition, the PCR has an oMPR (output Master Plug Register) and an iMPR (input Master Plug Register) representing information on an output plug or an input plug inherent in each device. Although each device does not have a plurality of oMPRs and a plurality of iMPRs, the device can have a plurality of oPCRs and iPCRs corresponding to the respective plugs depending on the capability of the device. The flow of isochronous data is controlled by operating registers corresponding to these plugs.

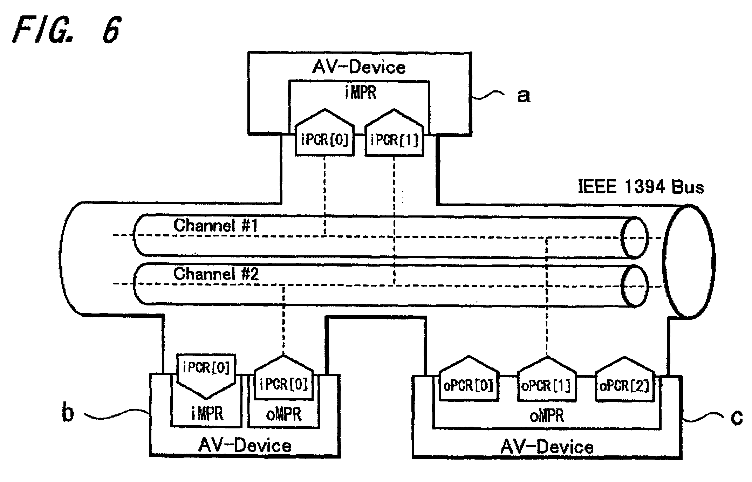

FIG. 6 is a diagram showing a relationship among a plug, a plug control register, and an isochronous channel. In this case, devices connected to the IEEE 1394 bus represent are shown as AV-devices a, b, c. Isochronous data having a channel designated by oPCR [1] out of oPCR [0] to oPCR [2] in which transmission speeds and the number of oPCRs are regulated by the oMPR of the AV-device c is transmitted to channel #1 of the IEEE 1394 serial bus. The AV-device a loads the isochronous data transmitted to the channel #1 of the IEEE 1394 serial bus. Similarly, the AV-device b transmits isochronous data to channel #2 designated by oPCR [0], and the AV-device a reads in the isochronous data from channel #2 designated by iPRC [1].

In this manner, data transmission is performed between devices connected through the IEEE 1394 serial bus. However, in the system of this embodiment, by using an AV/C command set regulated as a command for controlling the devices connected through the IEEE 1394 serial bus, control of the devices and judgment of states can be performed. This AV/C command set will be described below.

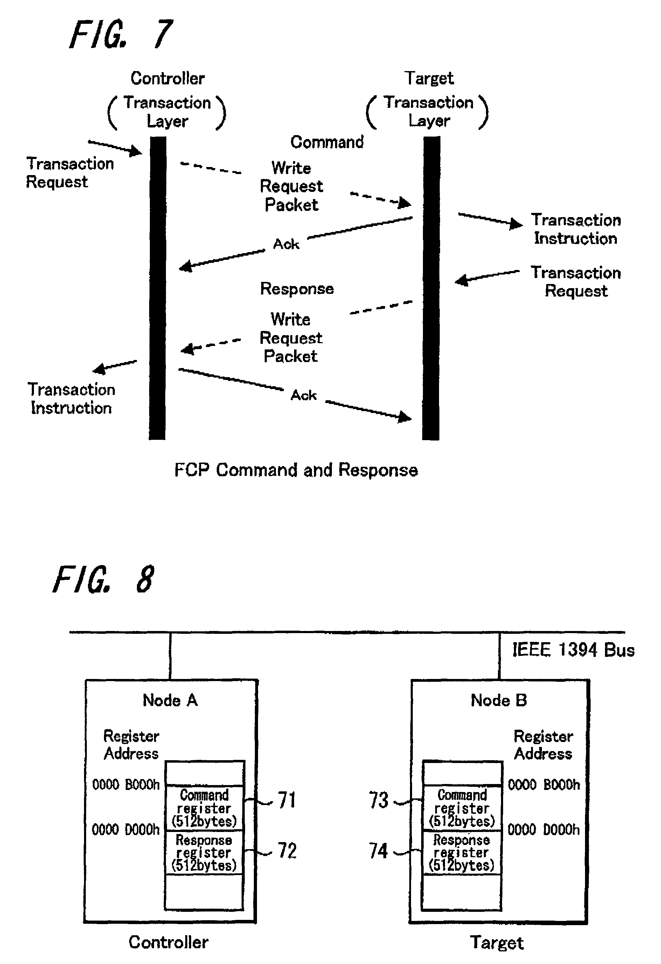

In case of the AV/C command, a command and a response corresponding to the command are transmitted on the bus line, for example, as illustrated in FIG. 7. Here, a controlling side is a controller and a controlled side is a target. The transmission of a command or a response is performed between nodes, by using the write transaction of the IEEE 1394 asynchronous communication. A target having received the data returns an acknowledge (ACK) to the controller, in order to confirm the reception.

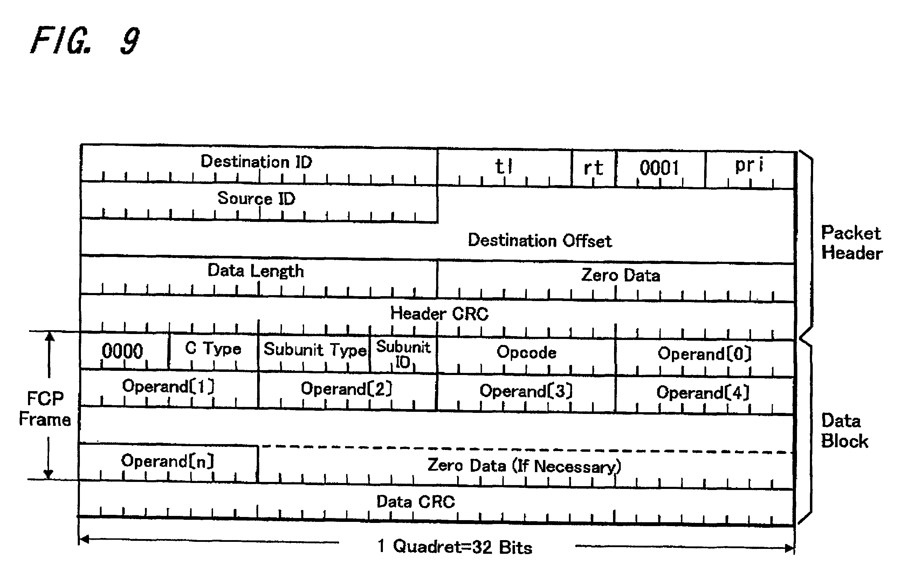

FIG. 8 is an explanatory view further showing in detail the relationship between the command and the response illustrated in FIG. 7. A node A and a node B are connected through the IEEE 1394 bus. The node A is a controller, and the node B is a target. For each of the node A and the node B, a command register 71, 73 of 512 bytes and a response register 72, 74 of 512 bytes are prepared. As shown in FIG. 8, the controller writes a command message in a command register 73 of the target to transmit an instruction. In contrast to this, the target writes a response message in a response register 72 of the controller to transmit a response. With respect to the two messages described above, control information is exchanged. The type of a command set transmitted by the FCP is described in a CTS in the data field in FIG. 9 (to be described later).

FIG. 9 shows the data structure of a packet transmitted in an asynchronous transfer mode of the AV/C command. An AV/C command set is a command set for controlling an AV-device, and is CTS (ID of a command set) = "0000". An AV/C command frame and a response frame are exchanged between nodes by using the FCP. In order to reduce a load on the bus and the AV-device, a response to a command is must be performed within 100 ms. As shown in FIG. 9, the data on the asynchronous packet is constituted by 32 bits (= 1 quadred) in the horizontal direction. The upper stage in FIG. 9 represents the header portion of the packet, and the lower stage in FIG. 9 represents a data block. A destination (destination ID) represents a destination.

A CTS arranged at the head portion of the FCP frame represents the ID of the command set, and satisfies CTS = "0000" in the AV/C command set. The field of ctype/response represents a function classification of commands when packets are commands, and the field represents processing results of commands. The commands are roughly classified as four types, i.e., (1) a command for controlling a function from the outside (CONTROL), (2) a command for inquiring a status from the outside (STATUS), (3) a command for inquiring the presence/absence of a support of a control command (GENERAL INQUIRY (the presence/absence of a support of opcode) and SPECIFIC INQUIRY (the presence/absence of a support of opcode and operands), and (4) a command for requesting that a change in status be notified to the outside (NOTIFY).

The response is returned depending on the type of the command. As responses to a control (CONTROL) command, "not implemented" (NOT IMPLEMENTED)", "accepted" (ACCEPTED), "rejected" (REJECTED), and "interim" (INTERIM) known. As responses to a status (STATUS) command, "not implemented" (NOT IMPLEMENTED) , "rejected" (REJECTED), "in transition" (IN TRANSITION), and "stable" (STABLE) are known. As responses to a command for inquiring the presence/absence of a support of a command from the outside (GENERAL INQUIRY and SPECIFIC INQUIRY), "implemented" (IMPLEMENTED) and "not implemented" (NOT IMPLEMENTED) are known. As responses to a command for requiring that a change in status is notified to the outside (NOTIFY), "not implemented" (NOT IMPLEMENTED), "rejected" (REJECTED), "interim" (INTERIM), and "changed" (CHANGED) are known.

A subunit type is set to specify a function in a device. For example, a tape recorder/player, a tuner, or the like is assigned to the subunit type. A BBS (Bulletin Board Subunit) which is a subunit used as a bulletin board for publishing information to other devices is also assigned to the subunit type. In order to perform discrimination when a plurality of subunits of the same type exist, addressing is performed by using subunit IDs as discrimination numbers. An opcode serving as a code of an operation represents a command, and an operand represents a parameter of the command. A field (additional operands) added as needed is prepared. Zero data or the like is added after the operands as needed. Data CRC (Cyclic Reduncy Check) is used to check an error in data transmission.

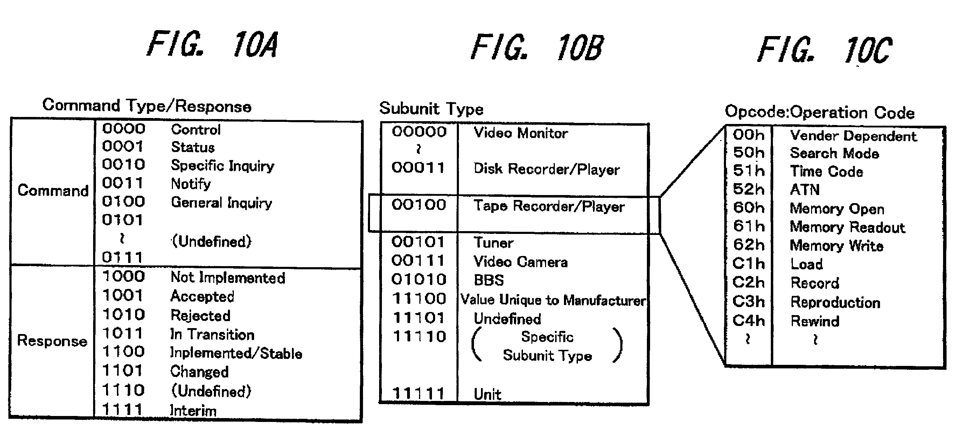

FIG. 10 shows a concrete example of an AV/C command. FIG. 10A represents a concrete example of the Ctype/response. The upper stage in FIG. 10 represents a command, and the lower stage in FIG. 10 represents a response. Control (CONTROL) is assigned to "0000", status (STATUS) is assigned to "0001", specific inquiry (SPECIFIC INQUIRY) is assigned to "0010", notify (NOTIFY) is assigned to "0011", and general inquiry (GENERAL INQUIRY) is assigned to "0100". "0101 to 0111" are reserved and secured for a specification in the future. Not implemented (NOT IMPLEMENTED) is assigned to "1000", accepted (ACCEPTED) is assigned to "1001", rejected (REJECTED) is assigned to "1010", in transition (IN TRANSITION) is assigned to "1011", implemented/stable (IMPLEMENTED/STABLE) is assigned to "1100", changed (CHANGED) is assigned to "1101", and interim (INTERIM) is assigned to "1111". "1110" is reserved and secured for a specification in the future.

FIG. 10B shows a concrete example of a subunit type. A video monitor is assigned to "00000", a disk recorder/player is assigned to "00011", a tuner is assigned to "00101", a video camera is assigned to "00111", a subunit used as a bulletin board called a BBS (Bulletin Board Subunit) is assigned to "01010", a subunit type (Vender unique) unique to a manufacturer is assigned to "11100", and a specific subunit type (Subunit type extended to next byte) is assigned to "11110". Although a unit is assigned to "11111", "11111" is used when data is transmitted to a device itself, e.g., when a power supply is turned on or off.

FIG. 10C shows a concrete example of an opecode (operation code: opcode). The table of the opecode exists for each subunit type. Here, the opcode is obtained when the subunit type is a tape recorder/player. An operand is defined for every opecode. In this case, a value (Vender dependent) unique to a manufacturer is assigned to "00h", a search mode is assigned to "50h", a time code is assigned to "51h", ATN is assigned to "52h", an open memory is assigned to "60h", memory read is assigned to "61h", memory write is assigned to "62h", load is assigned to "C1h", recording is assigned to "C2h", reproduction is assigned to "C3h", and rewinding is assigned to "C4h".

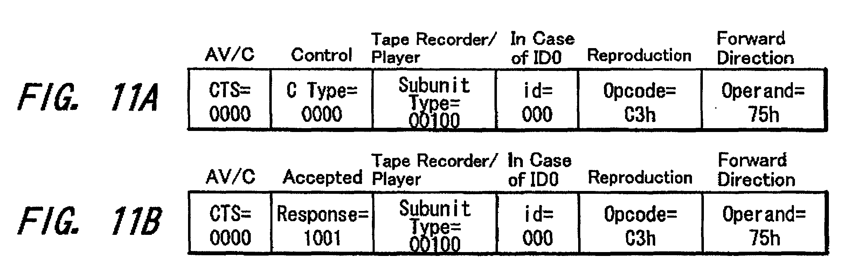

FIG. 11 shows a concrete example of an AV/C command and a response. For example, when reproduction instruction is made to a reproduction device serving as a target (consumer), a controller transmits a command as shown in FIG. 11A to the targets This command satisfies CTS = "0000" because the AV/C command set is used. Since a command (CONTROL) for controlling a device from the outside is used for ctype, ctype = "0000" is satisfied (see FIG. 10A). Since the subunit type is a tape recorder/player, subunit type = "00100" is satisfied (see FIG.10B). Id represents a case of ID0, and satisfies id = 000. The opcode becomes "C3h" which means reproduction (see FIG. 10C). The operand is "75h" which means forward (FORWARD).

When reproduction is performed, the target returns a response shown in FIG. 11B to the controller. Here, since "accepted" is set in the response, response = "1001" is satisfied (see FIG. 10A). Since FIG. 11B is the same as FIG. 11A except for the response, a description thereof will be omitted.

The method of performing a wireless communication with the other device (the portable telephone terminal 5 in case of the embodiment) on a wireless network formed by the wireless network processing unit 20 of the monitor receiver 1 will be described, this time. In case of this embodiment, as mentioned above, wireless communication is performed based on the Bluetooth standard, and the wireless transmission method of the Bluetooth standard will be described.

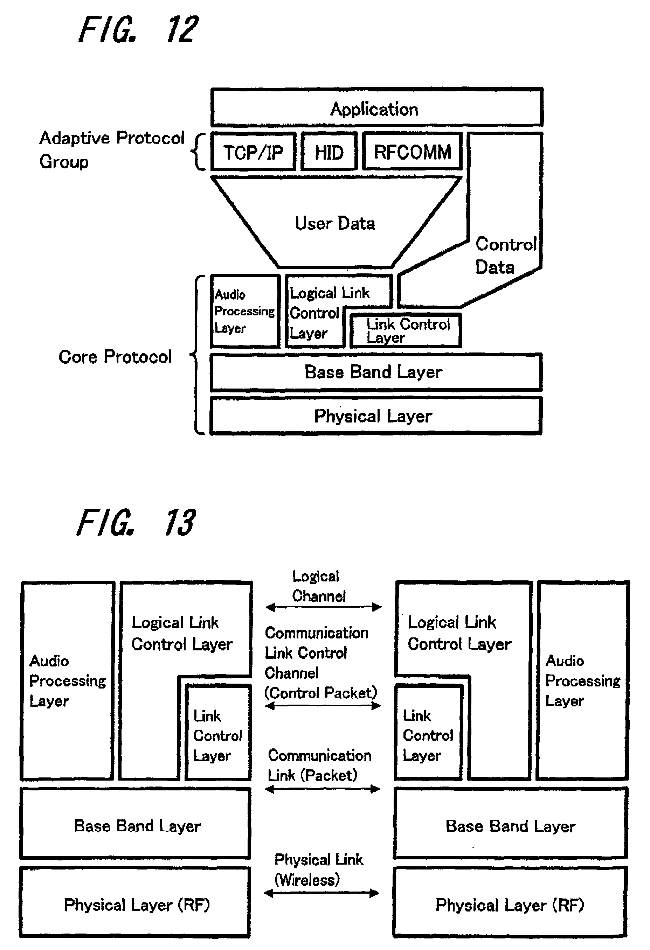

FIG. 12 is a diagram showing a protocol stack necessary for carrying out wireless communication based on the bluetooth. The protocol for the entire system of the bluetooth is divided to a core protocol, which is a major portion of the protocol of the bluetooth, application software which executes application service and an adaptive protocol group for matching communication protocols between the core protocol and application.

The protocol of the bluetooth core is composed of five protocols or comprised of a physical layer, a base band layer, an actual data processing layer and a logical link control layer, successively provided on top of another from the bottom layer.

The adaptive protocol group adapts the core protocol to application software so that various kinds of existing applications can be applied. This adaptive protocol group includes, for example, TCP/IP protocol, RFCOMM protocol for emulating serial port, a driver of an device (HID: Human Interface Device) which user operates and the like. For transmission of the AV/C data, which will be described later, a protocol which adapts a profile corresponding to this adaptive protocol group is prepared. The structure of a protocol necessary for transmitting the AV/C data will be described later.

As physical layer, frequency hopping type spectrum diffusion method using a frequency band of 2.4 GHz is employed. Transmission power is restricted to about 100 mW maxium, assuming a wireless communication over a short-distance of about 100 m. Further, this physical layer allows transmission power to be reduced up to - 30 dBm minimum by control from the link layer.

The base band layer is defined as a protocol for interfacing actual transmission/reception data with the physical layer. This layer provides with a communication link for transmitting/receiving data sent from a higher layer. At this time, control of the frequency hopping and control of the time axis slot are carried out. Further, processings for resending a packet, error correction and error detection are controlled by this base band layer.

The link control layer is a protocol for interfacing the transmission/reception packet on communication link is a protocol, which specifies setting of communication link to the base band layer or setting of various communication parameters relating to that link. Those are defined in the link control layer as control packet and communicate with a link control layer of an opposing terminal as required. This layer receives a direct control from a higher level application as required.

In the audio layer, audio data is exchanged after a communication link allowing the link control layer to transmit or receive data is set up. The audio data mentioned here refers to mainly audio data for communication through telephone and includes a dedicated processing layer at a relatively lower level layer in order to suppress data transmission delay to a minimum limit.

The logical link control layer is a protocol for interfacing with the link control layer and the base band layer so as to control the logical channel. Other transmission data than audio data which the audio layer handles is provided from a high level application to ethical link layer and actual data which is exchanged there is exchanged without making conscious of the size and timing of the data packet. For the reason, the logical link control layer controls data of the high level application as logical channel so as to carry out data division and data reconstruction.

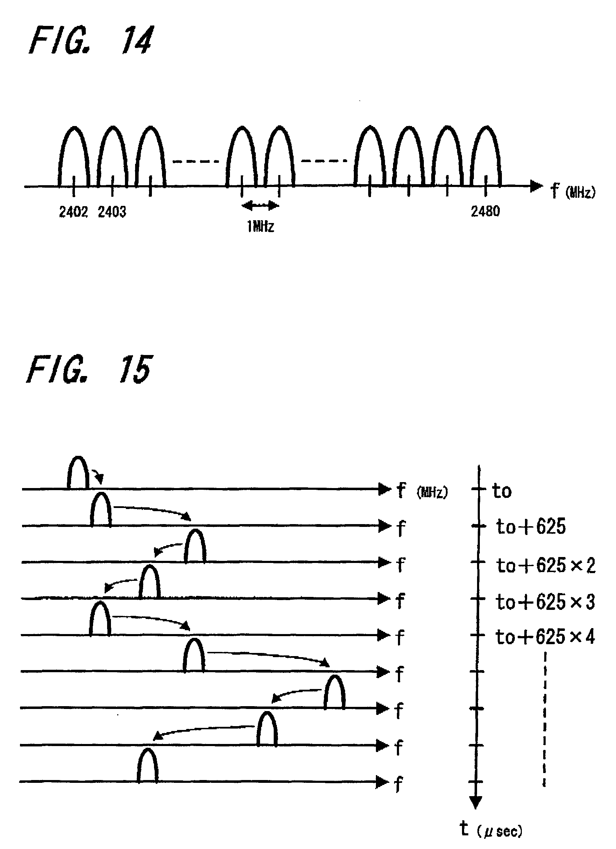

FIG. 13 shows a processing at each layer when wireless communication is carried out between two devices. A physical wireless communication line link is set up in the physical layer and transmission/reception of the packet is carried out through a link set up in the base band layer. Transmitting/receiving of control packet is carried out through a communication link control channel. Transmitting/receiving of user data packet is carried out through logical channel. This user data corresponds to stream data or command which is required to be transmitted.

Next, physical communication frequency set-up processing upon wireless communication based on this method will be described. FIG. 14 is a diagram showing the frequency for use based on this method and as shown in FIG. 14, there are 79 communication frequencies at an interval of 1 MHz from 2402 MHz to 2480 MHz. Each packet to be transmitted occupies a single transmission spectrum in these 79 transmission frequencies. Then, the transmission spectrum for use changes (hopping) every 625 seconds.

FIG. 15 shows an example of this communication frequency hopping, in which the communication frequency changes at random every 625 seconds from a specific timing t0. If the communication frequency changes every 625 seconds, the hopping occurs about 1600 times for a second, so that it is diffused within a band shown in FIG. 14 and transmitted, indicating that the spectrum diffusion is being caused.

In case of bluetooth, a unit of the packet is 625 seconds. This single unit of the packet may be used continuously to carry out transmission. For example, when bi-directional transmission is carried out between two devices, communications of both directions do not use the same quantity of the packets and in some case, plural packets may be used for communication in one direction.

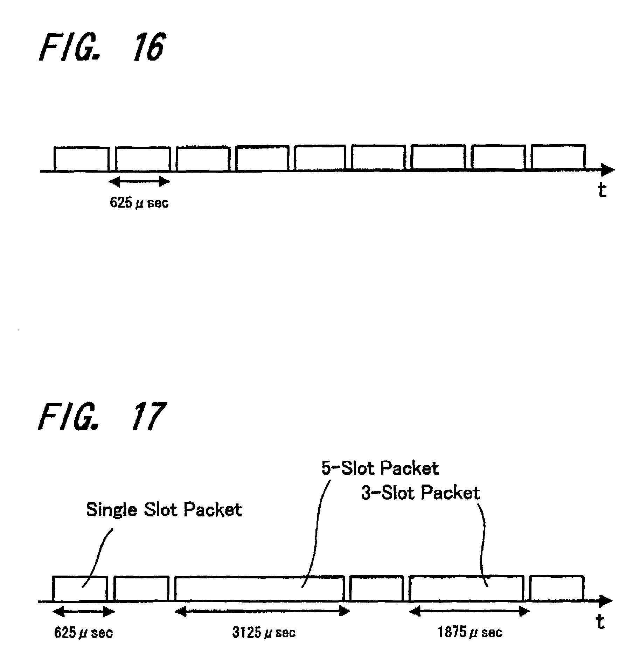

If all packets to be transmitted are packets of 625 seconds as shown in FIG. 16, frequency hopping occurs every 625 seconds as shown in FIG. 15. Contrary to this, in case where as shown in FIG. 17, three packets are used continuously or five packets are used continuously, transmission frequency is fixed while that slot continues.

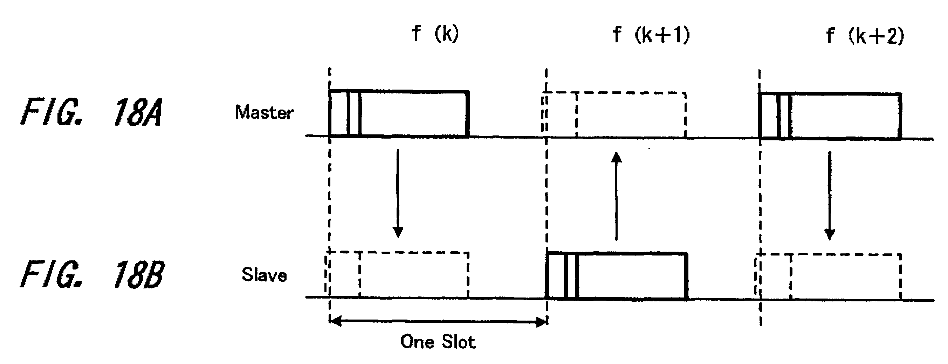

FIG. 18 shows communication status between two devices. When one device for carrying out wireless communication is assumed to be master while the other one is assumed to be slave, data of slot configuration is sent from the master to the slave in the period of a slot (625 seconds) (FIG. 18A) and in a next slot period, data of slot configuration is sent from the slave to the master (FIG. 18B). Hereinafter, the alternate transmission is repeated as long as the transmission continues. The frequency for wireless communication is changed such that the frequency is f(k), f(k+1), f(k+2), ...at every slot as described above.

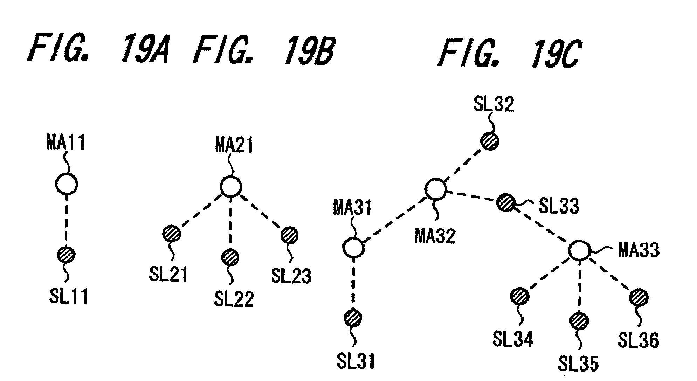

FIG. 19 is a diagram showing an example of the network structure composed of plural devices. In a communication system standardized according to the bluetooth, its network may be constructed with not only one-to-one wireless communication, but also with plural devices. That is, in case where wireless communication is carried out between two devices, one device serves as the master while the other device serves as the slave as shown in FIG. 19A, so that bi-directional wireless communication is executed between master MA11 and slave SL11 under a control of the master MA11.

On the other hand, as shown in FIG. 19B, it is permissible to prepare three slaves SL21, SL22, SL23 controlled by, for example, a single master MA 21 so that the network is constructed so as to carry out wireless communication among these four devices.

Further, as shown in FIG. 19C, it is permissible to prepare three masters MA31, MA32, MA33 and slaves SL31, SL32, SL33, SL34, SL35, SL 36 controlled independently by each master, construct three networks and then connect these three networks so as to expand the network configuration. In any case, direct communication cannot be executed between the slaves but communication is always executed through the master.

Meanwhile, a network comprised of a master and a slave directly communicating with that master is called pico-net, A network group having plural masters (that is, a network group comprised of plural pico-nets) is called caster net.

Next, the kinds of links for carrying out communication between devices based on bluetooth will be described. The bluetooth includes two kinds of the links, SCO (Synchronous Connection-Oriented) link and ACL (Asynchronous Connection-Less) link, which can be used separately depending on the purpose of application.

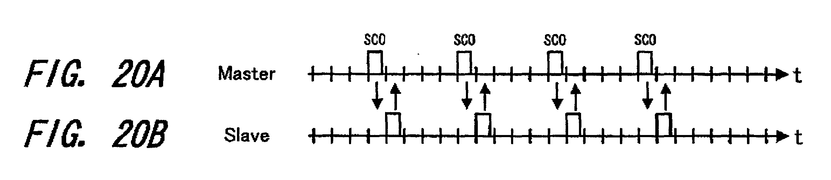

The SCO link is connection type which executes one-to-one communication between the master and a specific slave and so-called call switching type link. This link is used for an application in which real-time performance is required about mainly audio performance. In this SCO link, a communication slot is assured preliminarily at a specified interval on communication link within the pico-net and even if other data transmission occurs halfway, data transmission by the SCO link is taken as precedence. That is, as shown in FIG. 20, for example, SCO communication slot is transmitted alternately at a specified interval between the master and the slave. Fig. 20A shows a transmission from the master and Fig. 20B shows a transmission from the slave.

This SCO link can support three SCO links maximum corresponding to a single master at the same time. In this case, three SCO links may be supported by a slave or a SCO link may be supported for each of different three slaves. Meanwhile, the SCO link has no resending function and no error correction code is attached to a packet to be transmitted through the SCO link.

The ACL link is so-called packet switching type connection type, which enables 1-to-multiple communication between the master and plural slaves. Although it is capable of communicating with any slave in the pico-net, effective communication speed of each slave may be changed depending on data quantity or the number of the slaves. The SCO link and the ACL lank may be used mixedly.

The ACL link allows a single master to communicate with up to seven slaves at the same time. However, the ACL link which can be set up to each slave within a pico-net is only one and a slave cannot set up plural ACL links at the same time. To activate plural applications with a single slave, it is necessary to protocol-multiplex a higher level application. Unless specified specially, ACL packet of single slot is used for communication between the master and the slave. For the slave to transmit the ACL packet of multi-slot, a permission from the master is needed. Although the master can reject a request for transmission of the ACL packet of the multi-slot from the slave, the slave always must receive a request for transmission from the master.

The master notifies the slave of only a upper limit value of the multi-slot and whether or not the ACL packet of the multi-slot should be transmitted depends upon determination of the slave. On the other hand, because which the ACL packet is single slot or multi-slot depends on the determination of the master, the slave needs to always prepare for receiving the multi-slot packet.

The ACL packet is provided with the following three packet communication methods irrespective of definitions of the single slot and multi-slot. The first one is asynchronous communication method (Asynchronous transfer), the second one is Isochronous communication method (Isochronous transfer) and the third one is broadcast communication method (Broadcast transfer).

The asynchronous communication method is a communication method for transmitting/receiving an ordinary packet. Data transmission speed is changed depending on traffic amount of slaves existing in the pico-net and packet resending due to deterioration of communication line quality.

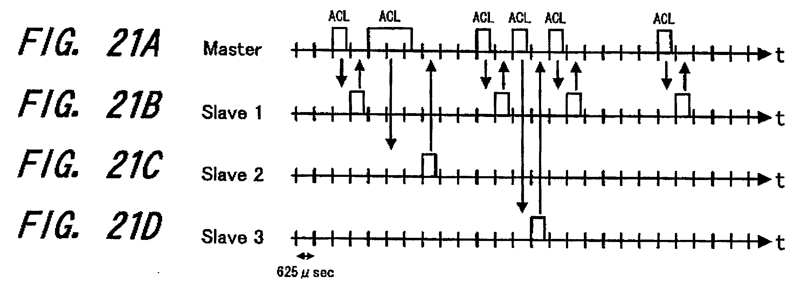

FIG. 21 shows a case where three slaves (slaves 1, 2, 3) in the same pico-net communicates according to asynchronous communication method. Fig. 21a shows a transmission from the master and Fig.21B, 21c, 21D show transmissions from slaves 1, 2, 3 respectively. The ACL packet is transmitted from the master to the respective slaves 1, 2, 3 in succession as shown in Fig. 21A and each slave receiving the ACL packet resends a packet for confirming the reception to the master as shown in Fig.21B, 21c, 21D.

Meanwhile, stream data such as audio data and video data may be sometimes transmitted according to the asynchronous communication method. In case for transmitting stream data according to the asynchronous communication method, a time stamp is attached to each ACL packet so as to secure continuity of stream data on the reception side.

According to the Isochronous communication method, a packet is always transmitted from the master to the slave within the period of a predetermined time slot. This method allows to secure a minimum delay of data to be transmitted. In case of isochronous communication, the slot interval needs to be agreed as maximum polling time, between the master and the slave before communication based on isochronous communication method is started.

The master can specify the maximum polling interval to the slave forcibly and reject a request for setting isochronous communication method from the slave. However, the slave cannot specify the maximum polling interval to the master or make a request for setting isochronous communication.

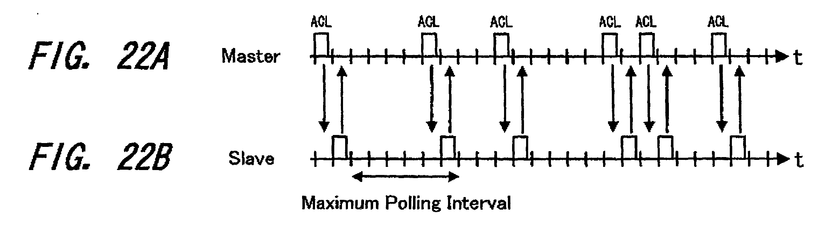

FIG. 22 shows a case for carrying out communication between the master and the slave according to the isochronous communication method. FIG. 22A shows the transmission from a master and FIG. 22B shows the transmission from a slave. As shown in FIG. 22, the ACL packet is transmitted from the master to a slave and just after receiving the ACL packet, the slave resends a packet for reception confirmation to the mater.

The broadcast communication method is set up by setting a slave identifier in the packet header to zero. Consequently, the broadcast communication packet can be sent from the master to all the slaves. A slave receiving the same packet does not transmit a packet for reception confirmation corresponding thereto. Although the slave does not confirm the reception, the master transmits broadcast communication packet continuously several times. The master needs to notify all the slaves of the frequency of the transmissions of plural times prior to broadcast communication.

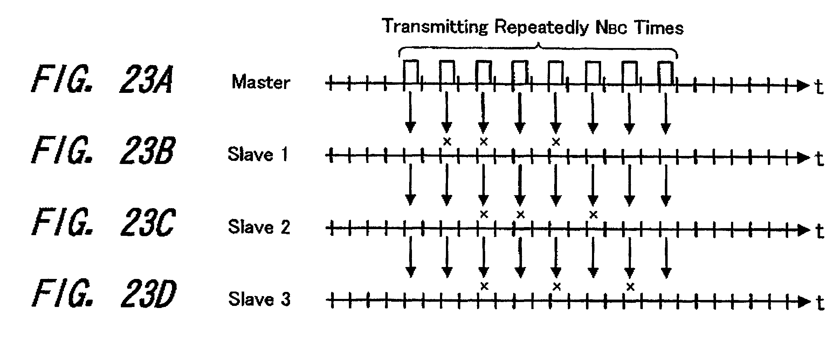

FIG. 23 shows an example of communication to all the slaves in the pico-net according to the broadcast communication method. FIG. 23A shows the transmission timing from a master, FIGS. 23B, 23C, and 23D show the receiving states at the respective slaves 1, 2, and 3. A point marked with X in FIG. 23 indicates an example in which the slave cannot receive a packet and by transmitting NBC times repeatedly, broadcast communication can be carried out to all the slaves securely.

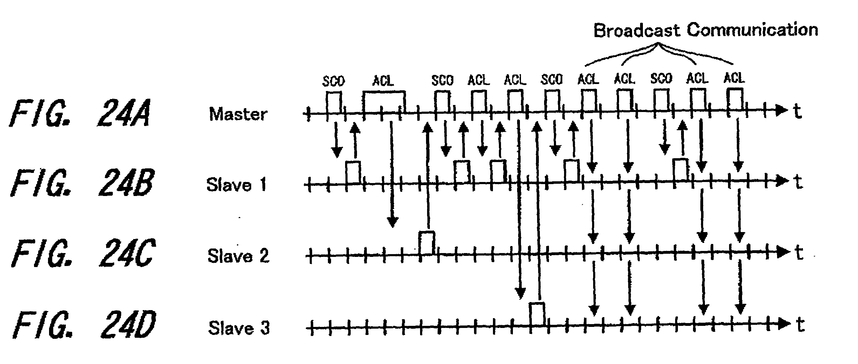

FIG. 24 is a diagram showing an example of communication using both the SCO link and ACL link. Fig.24A shows the transmission timing from the slave and Fig. 24b, 24C, 24D shows reception and transmission states of slaves 1, 2, 3 respectively. In this example, the SCO packet is transmitted through the SCO link between the master and the slave 1 at a predetermined cycle. The ACL packet is transmitted to three slaves 1, 2, 3 as required. Further, the broadcast communication packet is also transmitted repeatedly predetermined times. When a timing for sending the SCO packet arrives while this broadcast communication packet is being transmitted repeatedly, the SCO packet is transmitted.

**[Table 1]**

| Parameters for setting isochronous communication and broadcast communication | |
|---|---|
| ACL communication link | Parameter for setting communication system |
| Isochronous communication system | Maximum polling interval |
| Broadcast communication system | Repeated packet transmission frequency (N_{BC}) |

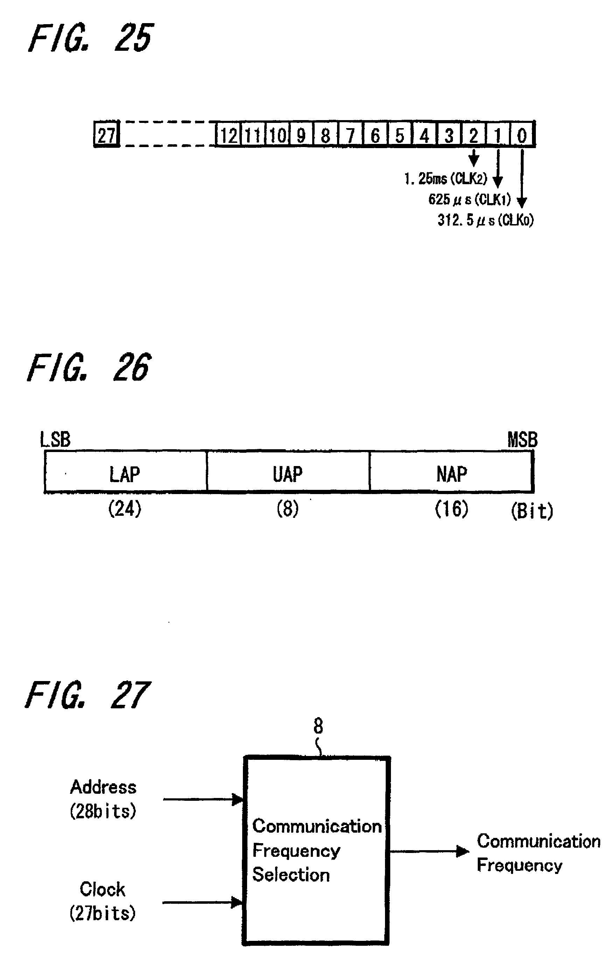

Next, the internal clock possessed by the master and the slave will be described. According to this communication system, respective devices use an internal clock so as to set up a frequency hopping pattern and the like. The clock possessed by the master and the slave is set up with a count value of, for example, a 28-bit counter of 0 to 27 as shown in FIG. 25. A single clock of this counter is 312.5 seconds. This 312.5 seconds is a minimum time unit for call processing and inquiry processing. In the 28∼bit counter in which the value is counted up by one every 312.5 seconds, a period is about 23 hours, thereby raising random characteristic of frequency hopping pattern.

The period of 312.5 seconds set up with a clock value of 0 bit is a time period of transmission packet when the mater carries out call and inquiry. The period of 625 seconds set up with a clock value of the first bit is a time period of a slot whose communication frequency is changed. The period of 1.25 m seconds set up with a clock value of the second bit is a transmission/reception time frequency of the master or slave. The period of 1.28 seconds set up with a clock value of the 12th bit is a clock timing in a time period for changing the reception frequency upon inquiry and call.

Each slave adds a specified offset value to its own clock so that it coincides with a clock of the master by referring to the master clock and then, uses the summed clock for communication.

When calculating a frequency hopping pattern in the master and slave, a 48-bit address added to each terminal as well as this clock is used as parameter. The 48-bit address is an absolute address which is defined according to an address system based on IEEE802 specification and allocated to each terminal of the bluetooth independently. FIG. 26 is a diagram showing the structure of a 48-bit address, in which its lower 24 bits is composed of LAP (Lower Address Part), next 8 bits is composed of UAP (Upper Address Part) and remaining 16 bits are composed of NAP (Non-significant Address Part).

For generation of the frequency hopping pattern synchronous in the pico-net, 24 bits of the entire LAP and lower 4 bits of the UAP in the master address, totaling 28 bits are used. Consequently, a frequency hopping pattern based on the master address is given to each pico-net. Because the master address is notified to the slave when communication status is gained, each slave can calculate the same frequency hopping pattern as the master independently.

FIG. 27 is a diagram showing an example of the structure for calculating a communication frequency. According to this structure, the low level 28 bits of the master address and low level 27 bits of the 28-bit clock are supplied to a communication frequency selecting portion 8 and a communication frequency which is a channel frequency hopping pattern is automatically determined. The call frequency hopping pattern and the inquiry frequency hopping pattern are different from the channel frequency hopping pattern.

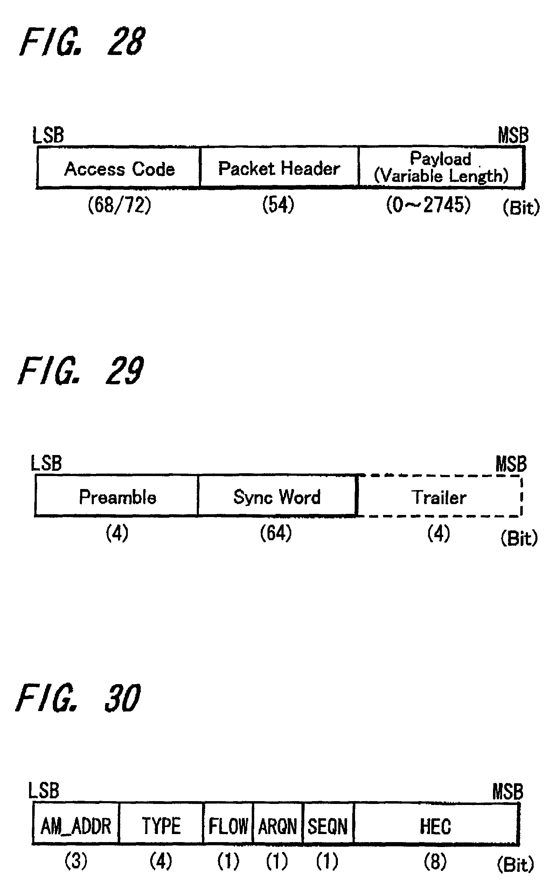

Next, the structure of data to be transmitted between the master and the slave will be described. FIG. 28 is a diagram showing a packet format. The packet is composed of three portions, access code, packet header and payload. The payload is set to a variable length depending on the amount of data to be transmitted at that time.

FIG. 29 is a diagram showing the structure of access code. The access code is composed of 68-bit or 72-bit data, indicating a destination of transmission packet and added to all packets to be transmitted/received. Depending on the kind of the packet, only this access code is attached.

Its preamble is composed of a fixed 4-bit length in which a pattern of 1, 0 is repeated depending on the LSB of a sync word. A trailer is composed of 4 bits in which a pattern of 1, 0 is repeated depending on the MSB of the sync word. Any one functions to remove the signal DC components of the entire access code. The 48-bit synch word is 64-bit data generated with 24-bit LAP in the 48-bit address. This synch word is used to identify the pico-net. In case of transmission in which no master address or clock can be obtained, a different synch word may be used in a packet for use in inquiry and call.

Next Table 2 summarizes access code types.

**[Table 2]**

| Type | Access code generation LAP | Pico-net status | Corresponding frequency hopping pattern |
|---|---|---|---|
| Channel access code (CAC) | LAP of master in pico-net | Communication status | Channel frequency hopping pattern |
| Call access code (DAC) | LAL of slave called by master | Call status | Call frequency hopping pattern |
| Inquiry access code (GIAC) | Reserved LAP | Inquiry status | Inquiry frequency hopping pattern |
| Special inquiry access code (DIAC) | Reserved LAP | | |

FIG. 30 is a diagram showing the structure of a packet header. The packet header is a portion including a parameter necessary for controlling the communication link in the base band layer.

The 3-bit AM ADDR is an identification field for specifying a slave on communication in the pico-net and a value to be allocated by the mater to each slave.

The 4-bit TYPE is a packet type field for specifying what packet the entire packet is.

The 1-bit FLOW is a field for use in control of flow control of a packet which communicates through the ACL link.

The 1-bit ARQN is a 1-bit field for use in notifying a packet transmission side of whether or not there is any error in a received packet. According to the bluetooth norm, any response packet for reception confirmation is not prepared and a packet reception confirmation is sent to a packet transmitter using this ARQN field. Depending on which this field value is 1 or 0, whether or not there is any error in the received packet or that there is an error is notified to the mating. Whether or not there is any error in the received packet is determined according to a header error detection code attached to a packet header of the received packet and an error detection code attached to the payload.

The 1-bit SENQ is a field for use for controlling so that the resent packet does not overlap on the reception side. When resending the same packet, the value is inverted between 1 and 0 alternately each time when a packet is transmitted.

The 8-bit HEC is a field in which the packet header error correction code is disposed. This error correction code is generated using a generating polynomial of g(D) = D8 + D7 + D5 + D2 + D + 1. An initial value set up in an 8-bit shift register for generating error correction code sets up 8 bits of the UAP in an address for bluetooth described above. The address used here coincides with an address used for generating the access code. The following Table 3 summarizes the initial values upon generating this error correction code.

**[Table 3]**

| Access code | 8-bit shift register initial value for HEC generation | Description |
|---|---|---|
| Channel access code (CAC) | UAP of master in pico-net | HEC is always attached to a packet on communication |
| Call access code (DAC) | UAP of slave to be called by master | Not related because the ID packet has no header |
| Inquiry access code (IAC) | Default initial value (00: hexadecimal value) | Not related because the IQ packet applicable for both GIC and DIAC has no packet header |

In order to identify a pico-net on communication, a channel access code (CAC) generated according to 24 bits of the LAP of the master address is used. In order to attain synchronism in transmission within the pico-net, it is necessary to synchronize the frequency hopping pattern with the time slot. At this time, even if other master having the same LAP exists nearby and further, the synchronism between the frequency and the time slot happens to coincide, it is possible to remove this by using the HEC which is a packet header error correction code.

The payload accommodates user data to be transmitted or received actually between terminals or control data. The user data includes data to be transmitted or received through the SCO link and data to be transmitted or received through the packet switching type ACL link.

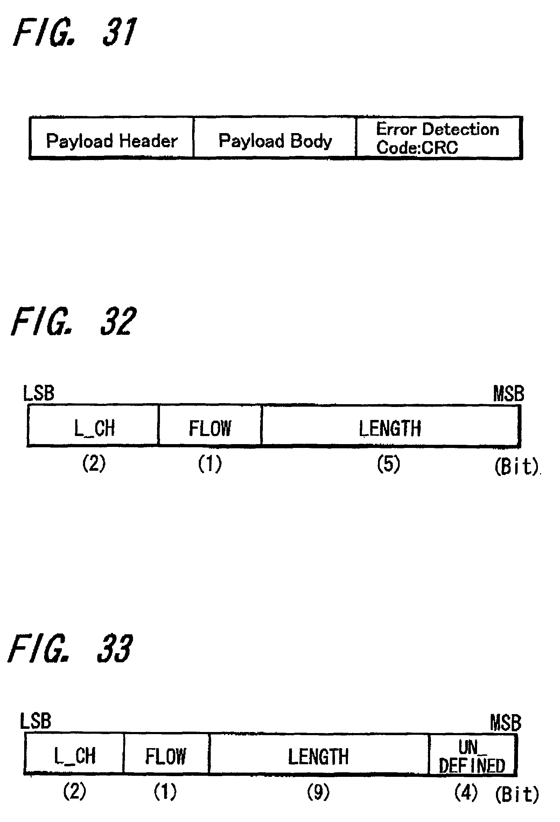

FIG. 31 is a diagram showing the structure of payload of the ACL link. The payload is comprised of three components, payload header, payload body and error detection code and the length of the entire payload is variable. On the other hand, because the payload of the SCO link secures a communication slot cyclically, it does not resend data packet and is composed of only a payload body, while no payload header or error detection code is added.

The payload header is a portion including a parameter necessary for controlling data of a higher layer than the base band layer and is data which is included in only the ACL link. FIG. 32 shows the structure of payload header of a single slot packet and FIG. 33 shows the structure of a payload header of a multi-slot packet.

The 2-bit L_CH data included in the payload header is a field for identifying a logical channel for specifying what is data of a higher layer than the base band layer. The SCO link and the ACL link are links in the base band layer and the control thereof is carried out according to information set up by the packet header. The L_CH identifies a logical channel which is defined by a higher level layer than the base band layer and is defined as shown in Table 4 to the three user logical channels.

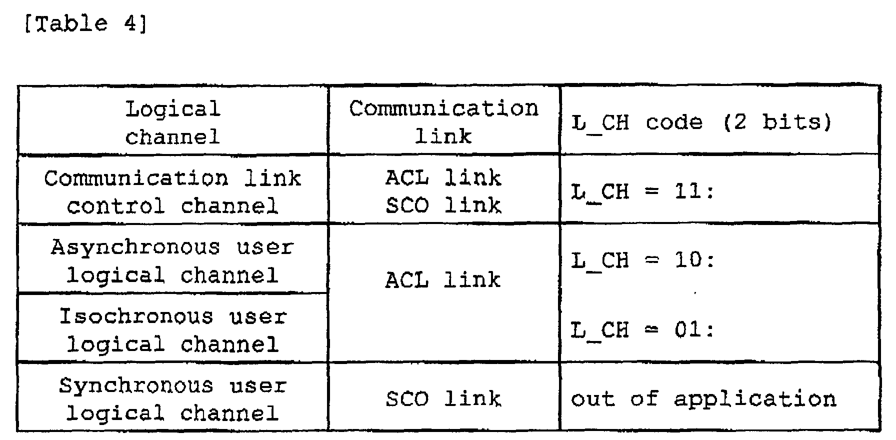

The 1-bit FLOW is a 1-bit data for use for flow control of data transmitted or received on user logical channel. The FLOW is controlled in each user logical channel, so that by setting FLOW = 0 and returning data, a mating is made to interrupt transmission of data temporarily. Further, by setting FLOW = 1 and then returning data when the reception buffer is empty, the mating is made to restart transmission of data. Although the setting of this FLOW field is executed by the link control layer, real-time data flow control is not guaranteed. The real-time data flow control is all carried out by the base band layer using the FLOW field in the packet header. Because data in the control packet is all processed by the link control layer, it is not transferred to the logical link control layer. Therefore, the control packet is not affected by the flow control by this FLOW and its value is always set to 1.

5-bit or 9-bit LENGTH is a field indicating the data length of a payload body in the unit of byte. This is 5-bit field in case of a single slot packet and 9-bit field in case of a multi-slot packet.

UNDEFINED exists in only the payload header of the multi-slot packet and is currently an undefined field, which is always set to 0.

Data of a length specified by LENGTH of the payload header is accommodated in the payload body. Because the payload of data packet is constructed of only a payload body in SCO link communication, there is no specification of the data length by LENGTH. If the DV packet is used, the data length of that data portion is indicated.

The CRC is a 16-bit field indicating an error detection code and a detection code for detecting whether or not there is any error in the payload header and payload. This error detection code is generated using a generating polynomial of g(D) = D16 + D12 + D5 + 1. An initial value to be set in a 16-bit shift register upon its generation is set up to a 16-bit value obtained by adding 8-bit zeroes to 8 bits of the UAP in an address, which has been already described. The address for use here is the same as the address for use in generating the access code like the HEC.

Next, the packet type will be described.

The TYPE field specifies a packet type as described about the packet header. If speaking about this packet type to be set up here, there are a common packet used in the SCO link and ACL link in common and an inherent packet of the SCO link or ACL link.

First, the common packet will be described. The common packet includes NULL packet, POLL packet, FHS packet, DM1 packet, IQ packet and ID packet.

The NULL packet is a packet comprised of an access code and a packet header, having no payload. The length of the packet is fixed to 126 bits. This packet is a packet for transmitting/receiving the status of a communication link and controls packet reception confirmation (ARQN) and flow control (FLOW). A confirmative response of a packet corresponding to the reception of this NULL packet is not required.

The POLL packet is a packet comprised of an access code and a packet header like the NULL packet and fixed to 126 bits so as to control the status of communication link. In case of this POLL packet, when the POLL packet is received, it is necessary to transmit a response about confirmation of the packet even if there is no data to be transmitted, different from the NULL packet.

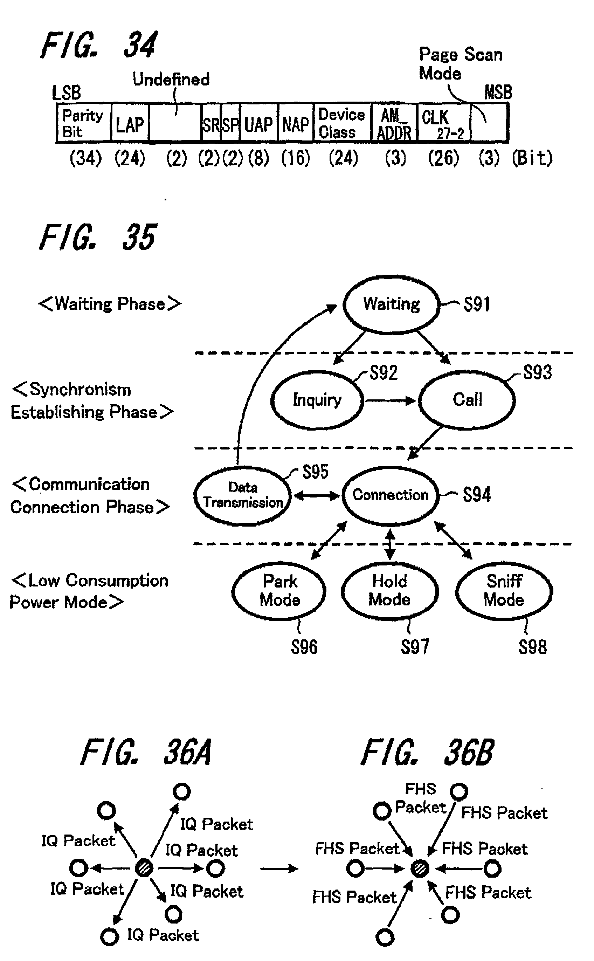

The FHS packet is an important control packet for achieving synchronism in the pico-net and transmitted when a clock and an address which are independent parameters for establishing synchronism between the mater and the slave are exchanged. FIG. 34 is a diagram showing an example of the structure of the payload of the FHS packet. The payload of the FHS packet is comprised of 11 fields and composed of 160 bits by adding a 16-bit error detection code to 144 bits of this 11 fields. The 11 fields composing the FHS packet will be described.

The 34-bit parity bit is a field including a parity to a sync word in an access code set up by the FHS packet.

The 24-bit LAP is low level 24 bits of an address of a terminal for transmitting the FHS packet. 2 bits following the LAP is an undefined field and set to 0.

The 2-bit SR is a 2-bit field, which upon call, specifies the frequency of repetition for the master to transmit an ID packet string and the period of scanning for the slave to scan the ID packet string from the master.

The 2-bit SP is a field, which upon inquiry, specifies a time for the slave to execute independent call scanning after the slave receives an IQ packet from the master and transmit the FHS packet to the master.

The 8-bit UAP is high-level 8 bits of an address of a terminal for transmitting the FHS packet.

The 16-bit NAP is 16 bits except LAP and UAP within an address of a terminal for transmitting the FHS packet.

The class of a 24-bit device is a field indicating the kind of the terminal.

The 3-bit AM ADDR is a 3-bit field for the master to identify the slave. In the call processing, the master specifies a slave identifier for use in the pico-net through the FHS packet which the master transmits to the slave. In the FHS packet which the slave transmits as a response of IQ packet from the master, AM ADDR is meaningless and needs to be set to 0.

26-bit CLK 27-2 is a field indicating high level 26 bits in a clock possessed by the terminal. This clock has a clock accuracy of 1.25 seconds and when transmitting the FHS packet, the clock value at that time needs to be set.

3-bit page scan mode is a field for specifying a mode of call scan of default supported by a terminal which transmits the FHS packet.

Next, the DM1 packet will be described. If the DM1 packet is being transmitted or received through the SCO link, it always functions as a control packet. On the other hand, if it is transmitted or received through the ACL link, it not only functions as a control packet but also is used for transmission/reception of data packet.

If it is transmitted as a common packet through the SCO link or ACL link, it is defined as a control packet of the link control layer. When the DM1 packet is transmitted or received through the ACL link, which it is user packet or control packet cannot be distinguished only if a field (TYPE) for specifying a packet type is seen. Thus, by setting logical channel type field of the payload header to L_CH = 11, it is specified that the DM1 packet is a control packet for the link control layer. In case of data packet, L_CH = 01 or L_CH = 10 is set up by fragmentation of original user data.

The IQ packet is a packet which the master broadcasts corresponding to inquiry and composed of only inquiry access codes.

The ID packet is a packet which upon call, the master transmits by specifying a specific slave and composed of only call access codes. The IQ packet and ID packet are packets not defined on the type field of the packet header.

Next, SCO packet, which is data packet transmitted or received on the SCO link, will be described. The SCO packet is comprised of four kinds, HVI packet, HV2 packet, HV3 packet and DV packet.

The payload of the HV1 packet is composed of only a payload body, which accommodates user data of 10 bytes. Because basically the SCO packet is not resent, this 10 bytes do not contain any error detection code. Then, the data is subjected to error correction coding at 1/3 rate, so that finally it has a payload length of 240 bits.

The payload of the HV2 packet is composed of only a payload body and accommodates 20-byte data. This 20 bytes do not include any error detection code. Then, the data is subjected to error correction coding at 2/3 rate, so that finally, it has a payload length of 240 bits.

The payload of the HV3 packet is composed of only a payload body and accommodates 30-byte data. This 30 bytes do not contain any error detection code. This 30 bytes is not subjected to error correction coding.

The DV packet is comprised of an audio part of a fixed length of 10 bytes and a variable length data part of up to 9 bytes. Although any error correction code is not contained in 10 bytes of the audio part, a 2-byte error detection code for a part of 10 bytes max. expanded from 1-byte payload header is attached to the data part.

The ACL packet transmitted/received on the ACL link includes DM1 packet, DH1 packet, DM3 packet, DH3 packet, DH5 packet, DH5 packet and AUX1 packet.

The payload of the DM1 packet is comprised of 1-byte payload header, a variable length payload body of 17 bytes max. and an error detection code.

The configuration of the DH1 packet is the same as the DH1. However, the payload is not subjected to error correction coding. Therefore, it is capable of transmitting or receiving a variable length data of up to 27 bytes.

The payload of the DM3 packet is comprised of a 2-byte payload header, a variable length payload body of up to 121 bytes and an error correction code. The payload of the DM3 packet is subjected to error correction coding at 2/3 rate.

The configuration of the DH3 packet is the same as that of the DM3 packet. However, the payload is not subjected to error correction coding. Therefore, it is capable of transmitting or receiving a variable length data of up to 183 bytes.

The payload of the DM5 packet is comprised of 2-byte payload header, a variable length payload body of up to 224 bytes and a 2-byte error correction code.

The configuration of the DH5 packet is the same as that of the DM5 packet. However, the payload is not subjected to error correction coding. Therefore, it is capable of transmitting or receiving a variable length data of up to 339 bytes.

The AUX packet is the same as the DH1 packet in case where no 2-byte error detection code is contained. That is, the AUX1 packet is not resent. The payload body is increased by 2 bytes, so that it is capable of transmitting or receiving a variable length data of up to 29 bytes.

Next, transition status based on bluetooth will be described. The transition status of this method is composed of three phases relating to transmission and low consumption power mode relating to power consumption at a terminal. The three phases relating to transmission is divided to waiting phase, synchronism establishing phase and transmission phase. Further, the low consumption power mode is divided to three types, park mode, hold mode and sniff mode. FIG. 35 is a diagram showing a status transition and there are transitions indicated with arrows.

The waiting phase (S11) is composed of a processing condition and a phase in which any packet is not transmitted or received. Just after a terminal is powered on or when communication link is cut out, the terminal is kept in the waiting phase. In this waiting phase, the roles of the master and the slave are not different.

The synchronism establishing phase is composed of two kinds, inquiry (S12) and call (S13).

The inquiry is a first stage processing condition for establishing synchronism in the pico-net. A terminal intending to transmit for the first time is always transferred to inquiry after the waiting phase.

The call is a second stage processing condition for establishing synchronism in the pico-net. Although basically, that condition is attained from the inquiry, if the first stage processing for establishing synchronism in the pico-net with the inquiry condition is already completed, the call may be attained directly from the waiting phase.

In this inquiry, the roles of the master and the slave are clearly different. The master in this processing condition broadcasts IQ packets continuously irrespective of whether or not a slave exists nearby. If a slave in the inquiry condition exists nearby, the slave transmits the FHS packet to the master in order to notify its attribution each time when it receives the IQ packet. Through this FHS packet, the master is capable of knowing an address and a clock of the slave.

FIG. 36 is a diagram showing a processing which the master and slave in this inquiry condition carry out. If as shown in FIG. 36A, the master in the center transmits the IQ packet, a surrounding slave transmits the FHS packet to the master as shown in FIG. 36B. The master in the inquiry condition receives the FHS packet from unspecified plural slaves.

Here, a fact that plural slaves transmits the FHS packet to a specific IQ packet at the same time is a problem. If plural FHS packets are transmitted at the same time, a collision of the packets occurs so that the master cannot distinguish the transmitted FHS packets. According to the bluetooth, the random time is backed off when transmitting the FHS packet in order to avoid such a collision. That is, the slave does not transmit the FHS packet to the master with respect to the IQ packet received for the first time and after that, interrupts reception of the IQ packet while the random time is backed off. After that, the slave restarts reception of the IQ packet and next, just after the IQ packet is received, transmits the FHS packet to the master. If the slave receives the FHS packet, it interrupts the reception of the IQ packet again while the random time is backed off. After that, this action is repeated.

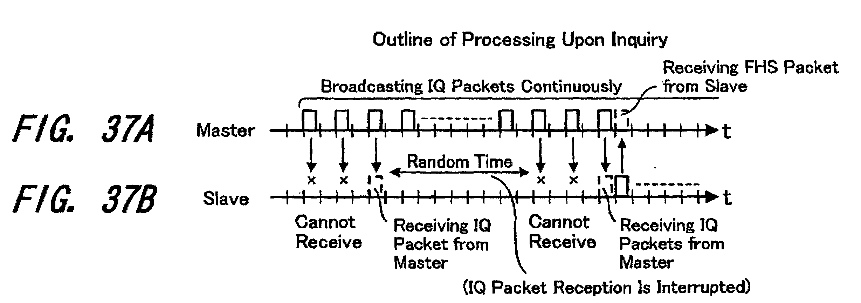

FIG. 37 is a diagram showing an outline of processing in the master and slave upon the inquiry. Fig. 37A shows the transmitting/receiving of the master and Fig. 37B shows the transmitting/receiving of the slave. Because the master does not notify the slave that it can receives the FHS packet without any error, the slave in the inquiry condition remains in a state just after the FHS packet is transmitted. However, because the same IQ packet is broadcast repeatedly in a specified interval of time, the master receives plural FHS packets for each slave in the inquiry condition. That is, by continuing the inquiry in a specified interval of time, certainty of transmission/reception of the FHS packet is intensified.

In case of the call, the roles of the master and slave are different. With this processing condition, the master selects a slave scheduled to communicate with based on information of the FHS packet transmitted/received in the inquiry and transmits the ID packet to that slave. If the master confirms the reception of the ID packet, it transmits the FHS packet to that slave. Consequently, the slave can know the address and clock of the master.

As an access code to the ID packet and FHS packet to be transmitted/received here, the call access code is used.

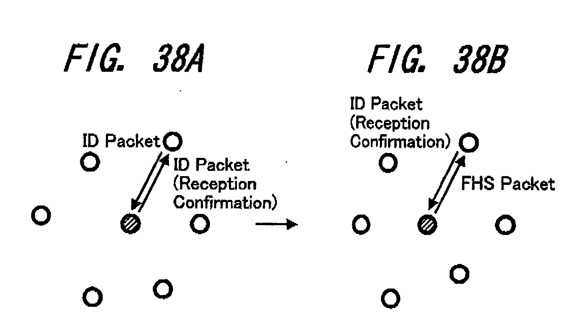

FIG. 38 shows an outline of processing operation carried out by the master and slave in the call condition. If the master located in the center transmits the ID packet to the slave as shown in FIG. 38A, the slave notifies of reception confirmation. Further, if the master transmits the FHS packet to the slave as shown in FIG. 38B, the slave notifies of reception confirmation.

Different from a processing to unspecified plural slaves upon inquiry, processing is exchanged between a specified slave and master upon inquiry. Because transmitting/receiving of the packet can be carried out one to one, the master and slave can execute processing while confirming the transmitting/receiving.

After receiving the ID packet from the master, the slave transmits the same ID to the master so as to notify of reception confirmation. Next, the master transmits the FHS packet to the slave so as to notify the slave of its own address and clock. If the slave receives this FHS packet without any error, it transmits the ID packet to the master so as to confirm the reception. At this time, information about the address and clock necessary for synchronism in the pico-net is exchanged between the master and the slave together with the inquiry processing.

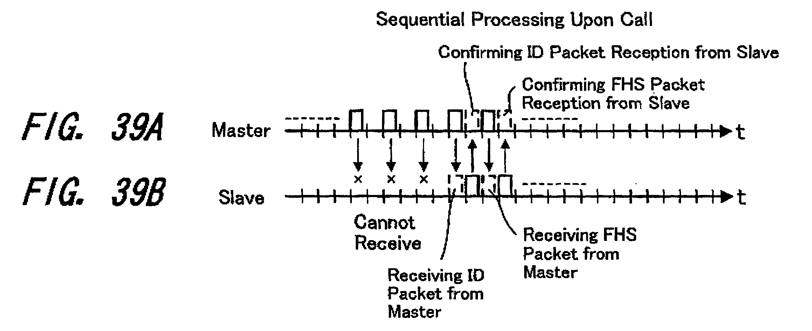

FIG. 39 is a diagram showing an example of processing between the master and the slave upon call. FIG. 39A shows the transmitting/receiving timing at a master and FIG. 39B shows the transmitting/receiving timing at a slave.

The communication connection phase shown in the status transition diagram of FIG. 35 includes connection (S14) and data transfer (S15). Because in this communication connection phase, the master is synchronous with the slave in the pico-net after synchronism establishing phase, this allows actual communication to be executed. In the connection status, transmission/reception of data packet is not carried out. Those transmitted/received at this time are restricted to control packet for setting communication link, control packet relating to security and control packet relating to low consumption power mode.

On the other hand, in data transfer status, transmission/reception of data packet is permitted. If the status is changed to connection for the first time after the synchronism establishing phase, basically it cannot be changed to data transmission unless processings for connection certification and coding between the master and slave are completed. The roles of the master and slave on connection are different depending on the content of control package to be controlled there.

Transmitting/receiving of data packet on data transfer are carried out according to rules of the master, slave and time slot. If a terminal relating to data transmission cuts out communication or a controller in a terminal is reset in terms of hardware, the terminal is turned from data transmission state to waiting state.

The low consumption power mode refers to a mode for providing low consumption power status of a terminal which is turned from connection state. This low consumption power mode is divided to three types, park mode (S16), hold mode (S17) and sniff mode (S18).

The park mode is a mode particular to the slave and a low consumption power mode which maintains synchronism in the pico-net established by connection.

The hold mode is a low consumption power mode which both the master and the slave can turn to and is a mode which maintains synchronism in the pico-net established by connection and in case of the slave, holds a slave identifier given by the master.

The sniff mode is a low consumption power mode particular to the slave and is a mode in which the slave maintains synchronism in the pico-net established by connection like in case of the hold mode and holds a slave identifier given by the master.

Under the bluetooth, it is possible to switch between a master and a specified slave in the pico-net.

Processing about security to be carried out with the communication connection phase being connected is largely divided to certification and coding. Certification processing refers to determining whether or not connection between itself and a specified mating is permitted. Coding processing refers to protecting data which is being transmitted from being tapped by a third party.

The security of the bluetooth is controlled under a concept of link key. The link key refers to a parameter for controlling one-to-one security between specified two terminals. This link key must not be disclosed to the third party.

As this link key, an initialization key for use between terminal which try to connect each other for the first time is used. If a link key is set up in the data base as parameter by connecting previously, that set up link key is used. The initialization key is generated using a PIN code from a higher level application and internally generated data.

General processing based on the bluetooth norm has been described up to here. In the short-distance wireless communication of this example, a command for controlling such an electronic device as audio device and video device (these devices are generally called AV devices) and a response are transmitted.

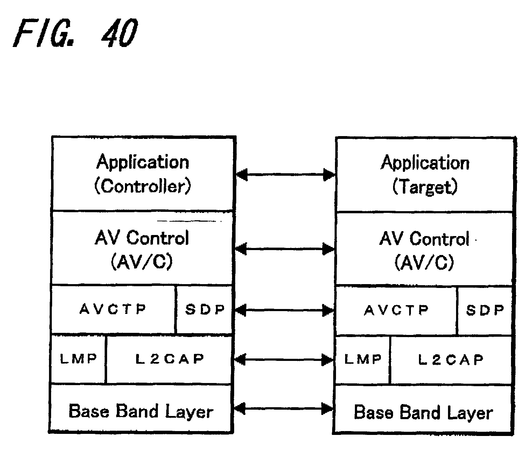

FIG. 40 is a diagram showing configuration of transmission for transmitting this command and response with a hierarchical structure. A terminal on command transmission side is called controller while a terminal which receives that command and sends back a response to the command transmitter is called target. The relation between this controller and target is other concept than the master and slave relation described above, necessary for carrying out communication connection control and basically, either may function as a terminal of the master or slave.

A layer for processing L2CAP packet for transmitting protocol data for control exists on the base band layer and AVCTP (Audio/Video Control Transport Protocol) protocol is prepared further thereon. A protocol called AV/C command is prepared on that protocol in order to control the AV device.

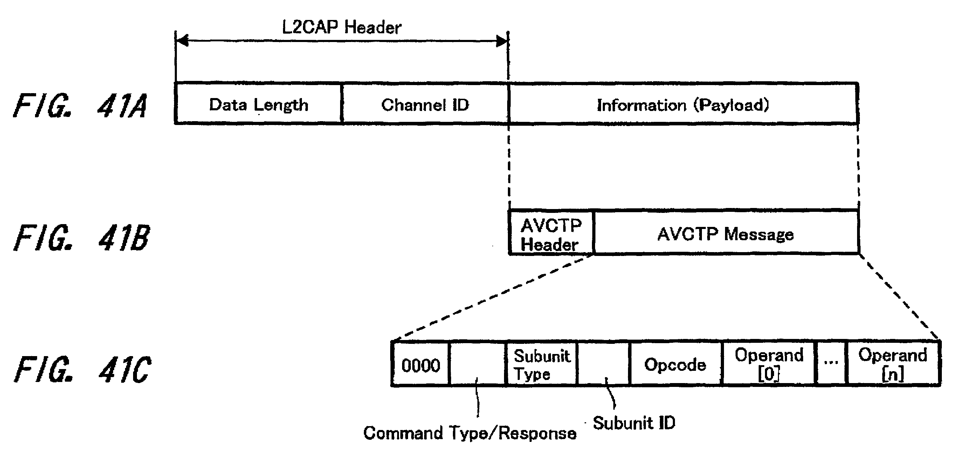

FIG. 41 is an example of the data structure of the L2CAP packet for transmitting data of that protocol. As shown in Fig. 41A, a header is attached to a heading portion of a payload section of this packet (portion marked with L2CAP Header), indicating data length (length) and channel ID. A subsequent section is actual information (information).

AVCTP header and AVCTV message are disposed in the information section as shown in Fig. 41B. As shown in Fig. 41C, the AVCTP message data comprises "0000" data (4 bits) indicating AV/C data, command/response data (4 bits) indicating a command and a response, data (5 bits) indicating subunit type, data (3 bits) indicating subunit ID, opcode (opcode) data (8 bits) specifying a function and operands which are data attached to the functions (operand : 8 bits), operand [0], operand [1], ....operand [n] (n is an arbitrary integer) . The data structure of the AVCTP shown in FIG. 41 applies a data structure specified as AV/C command set which is a standard for transmitting device control data on a network connected through a cable-based bus line.

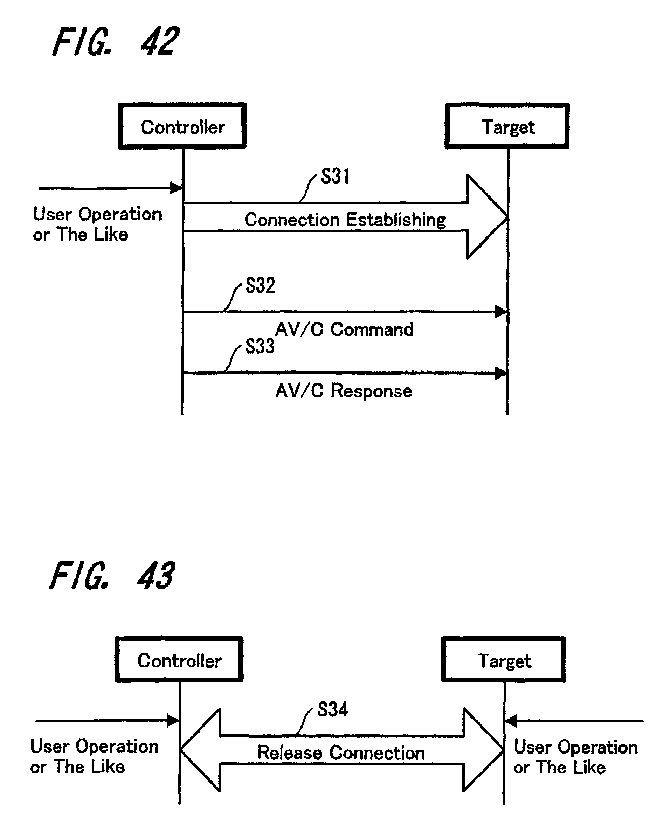

FIG. 42 is a diagram showing a condition in which a command and a response are transmitted by wireless between the controller and the target. If there is any user at the terminal of the controller side so that the necessity of transmitting a command to a target device occurs, the controller establishes a connection with the target (step S31) and transmits the AV/C command from the controller to the target through the established connection (step S32). The target receiving this command transmits a response to that command to the controller (step S33). Then, a processing corresponding to the command is executed as required. In case of a command for confirming the status of the target, a required data is sent back to the controller as a response.

If a processing for removing the connection is executed by user operation on the controller side or user operation on the target side as shown in FIG. 43, release connection processing for removing the connection set up to transmit the command or response is executed (step S34).

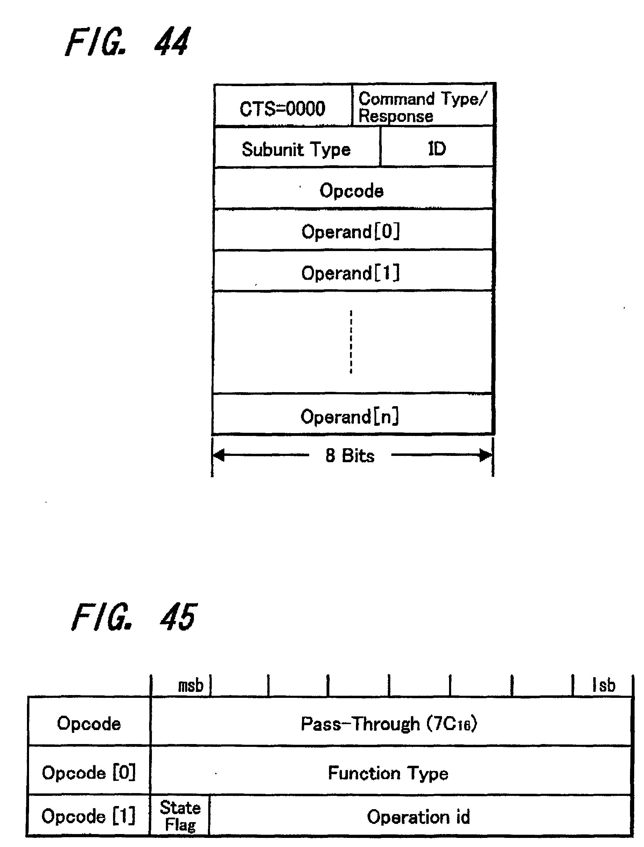

Next, the structure of the AV/C command set (that is, AVCTP data) for use in the system of this example will be described with reference to FIGS. 44-46. FIG. 44 indicates the data structure of a section to be transmitted as the AV/C command (that is, AVCTP data in case of this example) in the unit of 8 bits. The AV/C command set is a command set to control an AV device and CTS (command set ID) is "0000". The AV/C command frame and response frame are exchanged. A response to a command is sent for example, within a specified period. However, in some case, a temporary response is sent within the specified period and then a formal response is sent after some extent of interval.

The CTS indicates an ID of the command set and under the AV/C command set, CTS = "0000". When the packet. is a command, the field of c type/response (ctype/response) indicates a function class of the command, and when the packet is response, it indicates a command processing result. The kind of the command and response is the same as already described in the AV/C command.

The subunit type is provided in order to specify a function within the device. In order to make a discrimination when there are a plurality of subunits of the same type, the subunit ID is used for addressing as discrimination number. Opcode that is a code for operation represents a command and an operand represents a parameter of the command. A field to be added on demand is also prepared. Data 0 is added to after the operand on demand.

The data of the AVCTP protocol thus constituted is wireless-transmitted by the Bluetooth standard, thereby enabling a remote control of a device. Here, a description will be made in case where the device controlled by the data of the AVCTP protocol is provided with a panel subunit. The device controlled by the AVDCP protocol is provided with function units called subunits, similarly to the case of the device connected to the IEEE 1394 bus line, and as one of the subunits, there is, what is called, a panel subunit. This panel subunit is a device which displays a panel for GUI (Graphic User Interface) concerned with the operation executable by a controlled device and performs the display function on the panel specified by the key when there is a key operation corresponding to the display of the panel, at the side of the controlling device, for example, such as a remote control apparatus. As an example of a control by using this panel subunit, there is also a case of performing a control by using the pass-through command.

FIG. 45 is a view showing the configuration of the pass-through (PASSTHROUGH) command to be transmitted to the panel subunit. A code (7C₁₆) indicating that it is the pass-through command is added to the interval of the opcode. The data of the function type is positioned at the interval of the operand [0]. A state flag is attached to the head bit at the interval of the operand [1] and the operation ID is positioned at the remaining 7 bits. This state flag represents a user's operation of the remote control apparatus, such as pushing/releasing of the button. When the button is pushed, the flag is set to 0, and when the button is released, the flag is set to 1. A numeric shown by adding (₁₆) is a hexadecimal digit (the numeric shown by one digit including hexadecimal of 0, 1, ...9, A, B...F) shown by the 4-bits data.

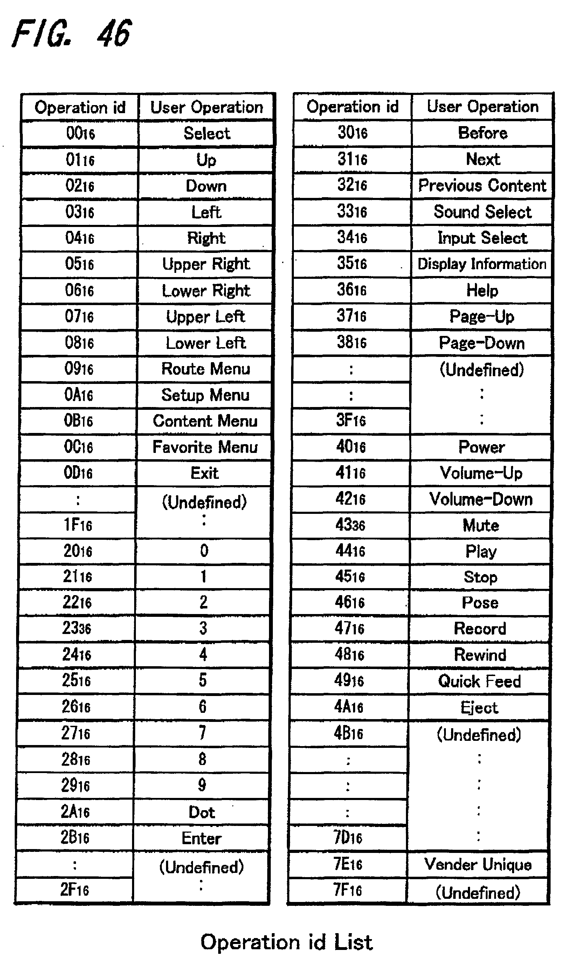

Various operations are assigned to every code value, for example, as illustrated in FIG. 46, as the operation ID positioned at the interval of the operand [1]. For example, there are a code for instructing the direction and the selection of up and down operation on the GUI screen, a code for instructing the selection of menu screen, and a code for directly instructing the operation of the audio device and the video device such as playback, stop, record, fast forward, and fast rewind.

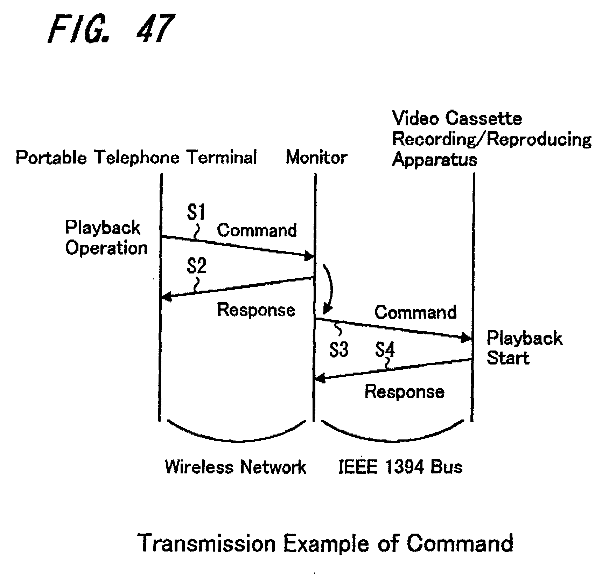

The processing when the wireless network processing unit 20 receives the pass-through command in the monitor receiver 1 of the embodiment will be described. Here, assume that the pass-through command wireless-transmitted, for example, from the portable telephone terminal 5 to the monitor receiver 1, of the network configuration shown in FIG. 1, is a command for instructing the operation (for example, playback) of the video cassette recording/reproducing apparatus 2 connected to the monitor receiver 1 through the IEEE 1394 bus line. At this time, as illustrated in FIG. 47, when a predetermined key for instructing the playback operation of the portable telephone terminal 5 is operated, the AVCTP protocol command including the operation ID instructing its playback is wireless-transmitted from the portable telephone terminal 5 (Step S1). The wireless-transmitted signal is received by the wireless network processing unit 20 of the monitor receiver 1. When receiving the command, the wireless network processing unit 20 of the monitor receiver 1 wireless-transmits a response corresponding to the command (Step S2), and the portable telephone terminal 5 receives the response.

The wireless network processing unit 20 of the monitor receiver 1 having received the command in Step S1 performs the processing of determining the destination of the received command, and as a result, when judging that the destination is, for example, the video cassette recording/reproducing apparatus 2, the IEEE 1394 bus/wireless network converting unit 25 within the wireless network processing unit 20 performs the processing for converting the above command into the AV/C command for the IEEE 1394 bus. As the conversion processing, for example, the data of the header portion defined by the Bluetooth standard, for example, as shown in FIG. 41 is removed from the command and the header portion defined by the AV/C command as shown in FIG. 9 is added thereto. At this time, the data of the destination on the IEEE 1394 bus is added to the data of the AV/C command.

The command as the format of the converted AV/C command is sent to the IEEE 1394 bus processing unit 10 within the monitor receiver 1 and transmitted from the bus line connected to the monitor receiver 1 (Step S3). When the video cassette recording/reproducing apparatus 2 receives the command transmitted to the bus line, the video cassette recording/reproducing apparatus 2 starts the playback operation and returns a response corresponding to the command to the monitor receiver 1 through the bus line (Step S4).

The command wireless-transmitted from the portable telephone terminal 5 is relayed by the monitor receiver 1, and transmitted to the video cassette recording/reproducing apparatus 2 through the bus line, Therefore, even if the video cassette recording/reproducing apparatus 2 cannot directly receive the command transmitted as a wireless signal, the portable telephone terminal 5 can work as a remote control apparatus of the video cassette recording/reproducing apparatus 2.

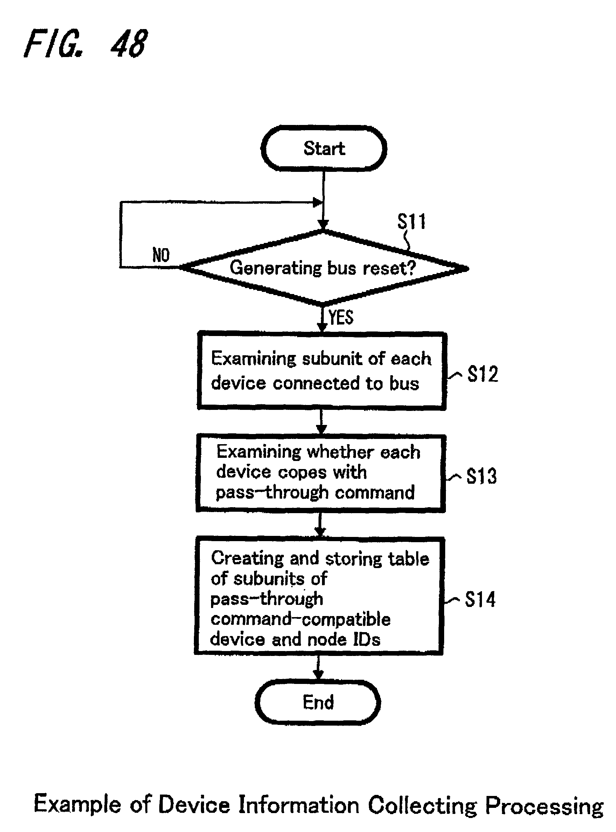

The processing necessary for the monitor receiver 1 to transmit this command transmitted as a wireless signal, to the bus line, will be described, here. In the IEEE 1394 bus processing unit 10 within the monitor receiver 1, the processing for collecting information of the devices connected through the bus line. FIG. 48 is a flow chart showing an example of this device information collecting processing. This device information collecting processing is performed, for example, by a control of the panel controller 13 within the IEEE 1394 bus processing unit 10 and kept in a memory within the panel controller 13.

Hereinafter, the device information collecting processing will be described. The panel controller 13 determines whether a bus reset occurs or not in the wired network connected through the bus line (Step S11). This bus reset is to occur when there is a change in the device structure connected to the bus line, and when there occurs a bus reset, a signal for bus reset identification is transmitted on the bus line. It waits for the occurrence of the bus reset, and when determining that the bus reset occurred, it performs the processing of examining the subunits of the respective devices connected to the bus (Step S12). The examination of the subunits is performed by sending commands for inquiring about the subunit structure sequentially, for example, from the monitor receiver 1 to the respective devices within the wired network, so to determine the subunit structure according to each response.

After the determination of the subunit structure, the processing whether the respective devices connected to the bus cope with the pass-through command is performed (Step S13). After finishing the processing, a correspondence table of the node IDs of the respective devices within the network and subunits of the pass-through command-compatible devices is created, and the data of the created table is stored in the memory of the panel controller 13 (Step S14). The data of the table stored is held until the next bus reset occurs, and it is updated by the processing from Step S11 to Step S14 at a bus reset time.

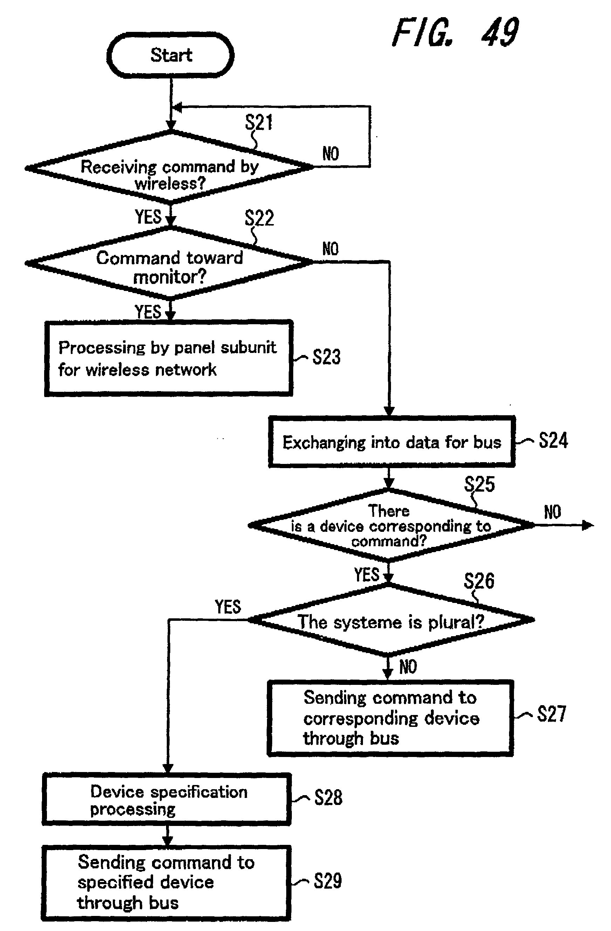

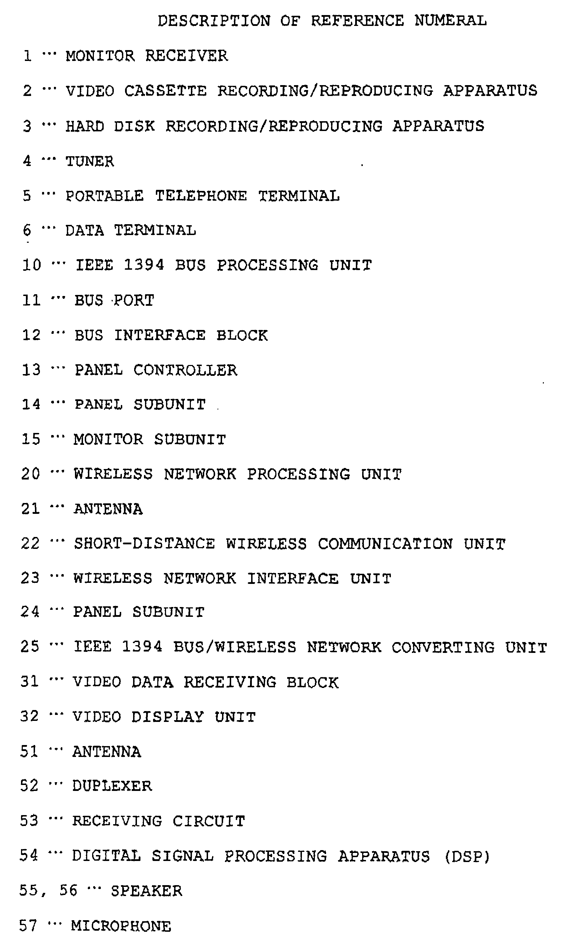

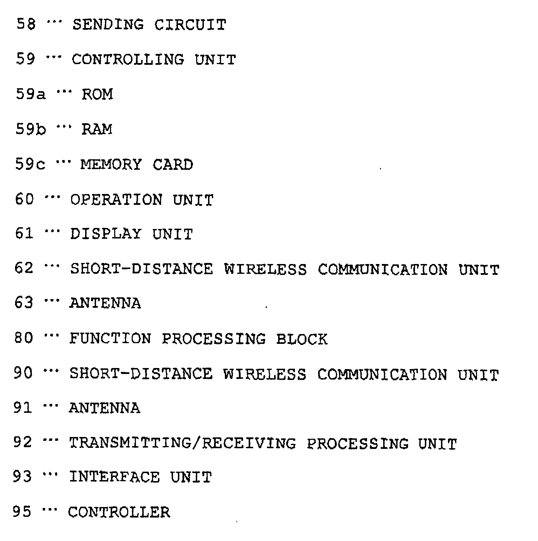

When receiving a command through a wireless signal, by using the data of the table indicating the correspondence of the devices on the bus kept as mentioned above, the processing for transmitting the command to the bus line is performed. FIG. 49 is a flow chart showing an example of the processing by the monitor receiver 1. The panel subunit 24 of the wireless network processing unit 20 determines whether the AVCTP protocol command has been received or not (Step S21), and waits until receiving the command. When determining that the pass-through command has been received in this step, it determines whether or not the above command is a command for controlling the operation of the monitor receiver 1 (Step S22). When it proves that the command is a command for controlling the display state as a result of judging the content of the command, it is decided that the command is a command for controlling the operation of the monitor receiver 1. When it proves that the command is a command for the monitor receiver 1, the panel subunit 24 of the wireless network processing unit 20 directly controls the respective processing units within the monitor receiver 1 and performs the necessary operation control as a receiver of the display state and the like on the video display unit 32 (Step S23).

When it is determined that the command is not a command for the monitor receiver 1 in Step S22, the IEEE 1394 bus/wireless network converting unit 25 within the wireless network processing unit 20 performs the processing for converting the command into the AV/C command for the IEEE 1394 bus (Step S24). At this time, whether or not the device where the operation instructed by the received command is performed is connected to the bus line, is determined from the data of the table stored in the panel controller 13 (Step S25), and when the corresponding device is not connected to the bus line, the processing as for the received command will be finished.

When it proves that there is the corresponding device, according to the data of the table stored in the panel controller 13, whether the corresponding device is single or plural, is determined (Step S26). As a result of the determination, when it proves that the corresponding device is single, the processing for adding the node ID of the corresponding device to the command is performed in the converting unit 25 and the converted command is transmitted from the port 11 of the IEEE 1394 bus processing unit 10 to the connected bus line (Step S27).

When it proves that the corresponding device is plural in the determination of Step S26, the device specification processing for specifying one of the devices is performed (Step S28), the processing for adding the node ID of the specified device to the command is performed in the converting unit 25, and the resultant command is transmitted from the port 11 of the IEEE 1394 bus processing unit 10 to the connected bus line (Step S29).

As the device specification processing in Step S28, for example, when there is a device which is transmitting the stream data such as the video data or the audio data in the isochronous channel on the bus line, of the devices corresponding to the command, the same device is set to the destination of the command. For example, in the network configuration shown in FIG. 1, three units of the video cassette recording/reproducing apparatus 2, the hard disk recording/reproducing apparatus 3, and the tuner 4 can transmit the stream data, and assuming that, for example, the video cassette recording/reproducing apparatus 2 of them is reproducing the video data and transmitting the reproduced video data on the bus, the video cassette recording/reproducing apparatus 2 is set to the destination of the command.

As the device specification processing in Step S28, when, for example, the processing for selecting the controlled device has been previously performed, the previously-selected device may be set at the destination of the command. For example, in the network configuration shown in FIG. 1, there are two units of the video cassette recording/reproducing apparatus 2 and the hard disk recording/reproducing apparatus 3 as the device for performing the playback operation, and by previously selecting one of them according to the user's operation, the selected device is set to the destination when receiving the command as for the playback operation.

As the device specification processing in Step S28, the other processing may be performed. For example, of the devices connected on the bus line, a device powered off in a resting state, in which the port connected to the bus line is in a suspend state, may be excluded from the candidate device.

As mentioned above, in a device which has received a command wireless-transmitted through the Bluetooth wireless network, the command is converted into a command for the wired bus line connected to the device, and the command is transmitted to the set destination device through the bus line. Therefore, as far as it is a device that can cope with the AV/C command, being connected to the IEEE 1394 bus line, it is possible to control the communication assuredly even in a device incapable of wireless communication through a wireless network. Especially, although the above-mentioned pass-through command has no data for specifying the final receiving destination of the command, the destination of the command can be determined from the control content of the command, and it can be transferred to the corresponding device assuredly. Therefore, even if a device for receiving a wireless signal is only one (the monitor receiver 1 in the above-mentioned embodiment), it is possible to preferably control the respective devices within a network connected through the bus line.

In the mode of the embodiment having been described so far, although the IEEE 1394 method is applied to a network connected through a wired bus line and the Bluetooth is applied to a wireless network, it is needless to say that the processing of the present invention can be applied also in the case of transmitting a control command by use of the other like wired network and wireless network.

As the device connected through a wired bus line, although the AV device dealing with the video data and the audio data is used, the present invention can be applied also in the case of connecting the other device to the bus line so as to control it, according to the transmission of a command.

In this case, for example, a data processing apparatus such as a personal computer may be connected to the bus line, software as a program for executing a function of performing the above-mentioned relay processing of the command may be installed in the data processing apparatus, and the command received by wireless the data processing apparatus may be transmitted to the other device on the bus line, by the computing processing according to the execution of the software. Alternatively, a program for performing such processing may be stored in a recording medium, which may be distributed to a user.

### INDUSTRIAL APPLICABILITY

As mentioned above, according to the present invention, a device control command issued from a device on the side of a wireless network can be transferred to a specified device within a wired network. Therefore, a device within a network formed by connection through a wired bus line can be remote-controlled according to a wireless command.

In this case, in the processing of determining the destination device of the command within the wired network, from the received command, a device corresponding to the content indicated by the command is searched from the devices connected to the wired network. Therefore, only a determination of the content indicated by the command can determine the destination of the command within the wired network at ease.

When determining the destination of the command, the functions of the devices connected to the wired network are previously examined and the data concerned with the examined functions is held, thereby making it easy to determine the device corresponding to the content indicated by the command.

Further, in the processing of determining the destination device of the command within the wired network, from the received command, the source device of the stream data within the wired network is determined as the destination device, thereby making it possible to directly control the device issuing the stream data to the bus line within the wired network.

Further, in the processing of determining the destination device of the command within the wired network, from the received command, devices previously registered within the device are determined, thereby making it possible to transfer the command to the registered devices assuredly.

Further, the command received as a wireless signal is converted into the data configuration for wired network, hence to be transferred to the wired network, which can cope with the case where the command configuration is different between the wired network and the wireless network.

Further, since the device control command in the wireless network is the AVCTP protocol command and the device control command in the wired network is the IEEE 1394 AV/C command, it is possible to use a network of the Bluetooth using the AVCTP protocol as the wireless network, and use a network of the IEEE 1394 method using the AV/C command as the wired network, thereby making it easy to exchange the command between the both networks.

## Claims

1. A data transmission method, wherein
when a device control command is transmitted from a second device through a predetermined wireless network, to a first device connected to a predetermined wired network,
said first device decides the received device control command, and when the above command is determined to be a command for controlling a predetermined device connected to the wired network as a result of the decision, the corresponding command is transmitted to said predetermined device through said wired network.

2. The data transmission method according to Claim 1, wherein
the processing of determining said predetermined device from the received command in said first device is processing for searching for a device corresponding to content indicated by said command, from the devices connected to said wired network.

3. The data transmission method according to Claim 2, wherein
said first device previously examines a function of a device connected to said wired network and holds data about the examined function.

4. The data transmission method according to Claim 1, wherein
the processing of determining said predetermined device from the received command in said first device is processing for determining a device of a sending source of stream data within said wired network as said predetermined device.

5. The data transmission method according to Claim 1, wherein
the processing of determining said predetermined device from the received command in said first device is processing of determining a device previously registered in the first device, as said predetermined device.

6. The data transmission method according to Claim 1, wherein
in said first device, a command received as a wireless signal is converted into data configuration for wired network and then transmitted to the wired network.

7. The data transmission method according to Claim 1, is **characterized in that**
the device control command from said second device is a command of AVCTP protocol and a command for controlling said predetermined device is AV/C command of IEEE 1394 method.

8. A data transmission apparatus comprising
first communication means, connected to a bus line forming a predetermined wired network, capable of performing data communication bidirectionally with another device within said wired network,
second communication means capable of data communication bidirectionally with another device forming a predetermined wireless network through wireless communication, and
control means of determining destination of the received device control command when said second communication means receives a predetermined device control command and transmitting said device control command from the first communication means when the determined destination is a device connected by said wired network.

9. The data transmission apparatus according to Claim 8, wherein
the processing of determining the destination of said device control command in said control means is processing for searching for a device corresponding to content indicated by said command, from the devices connected to said wired network.

10. The data transmission apparatus according to Claim 9, wherein
said control means previously examines a function of a device connected to said wired network, holds data about the examined function, and searches for a device corresponding to the content indicated by the command by using the held data.

11. The data transmission apparatus according to Claim 8, wherein
in the processing of determining the destination of said device control command by said control means, a device of a sending source of stream data within said wired network is determined to be the destination.

12. The data transmission apparatus according to Claim 8, wherein
in the processing of determining the destination of said device control command by said control means, a device previously registered is determined to be the destination.

13. The data transmission apparatus according to Claim 8, comprising
converting means for converting a command received by said second communication means into a command to be transmitted by said first communication means.

14. The data transmission apparatus according to Claim 8, is **characterized in that**
the device control command from said second communication means is a command of AVCTP protocol and the device control command from the first communication means is AV/C command of IEEE 1394 method.

15. A recording medium which records a program for,
when a device control command is transmitted from a second device through a predetermined wireless network, to a first device connected to a predetermined wired network,
making said first device decide the received device control command and transmitting the corresponding command to a predetermined device through said wired network when the above command is determined to be a command for controlling the predetermined device connected to said wired network as a result of the decision.

16. A program comprising,
when a device control command is transmitted from a second device through a predetermined wireless network, to a first device connected to a predetermined wired network,
making said first device decide the received device control command and transmitting the corresponding command to a predetermined device through said wired network when said command is determined to be a command for controlling the predetermined device connected to said wired network as a result of the decision.
